(19) **Europäisches Patentamt / European Patent Office / Office européen des brevets**

(11) **EP 3 127 971 B1**

(12) # EUROPEAN PATENT SPECIFICATION

(45) Date of publication and mention
of the grant of the patent:
**18.08.2021 Bulletin 2021/33**

(21) Application number: **15772279.4**

(22) Date of filing: **02.04.2015**

(51) Int Cl.:
*B32B 27/00* (2006.01)          *C09J 7/20* (2018.01)
*C09J 11/04* (2006.01)          *C09J 201/00* (2006.01)
*C08K 3/34* (2006.01)          *C08K 3/22* (2006.01)
*C08K 3/36* (2006.01)

(86) International application number:
**PCT/JP2015/060415**

(87) International publication number:
**WO 2015/152349 (08.10.2015 Gazette 2015/40)**

(54) **ADHESIVE SHEET**

KLEBEFOLIE

FEUILLE ADHÉSIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.04.2014 JP 2014076580**

(43) Date of publication of application:
**08.02.2017 Bulletin 2017/06**

(73) Proprietor: **LINTEC Corporation
Tokyo 173-0001 (JP)**

(72) Inventors:
• **UEMURA, Kazue
Tokyo 173-0001 (JP)**
• **KATO, Kiichiro
Tokyo 173-0001 (JP)**
• **AMINO, Yumiko
Tokyo 173-0001 (JP)**

• **SAITO, Shigeru
Tokyo 173-0001 (JP)**

(74) Representative: **Gille Hrabal
Partnerschaftsgesellschaft mbB
Patentanwälte
Brucknerstraße 20
40593 Düsseldorf (DE)**

(56) References cited:
**WO-A1-2014/051106      JP-A- 2002 275 433
JP-A- 2002 275 433      JP-A- 2008 150 431
JP-A- 2009 035 609      JP-A- 2010 106 239
JP-A- 2012 197 332      JP-A- 2012 201 877
US-B1- 6 294 250**

• **None**

**Description**

TECHNICAL FIELD

The present invention relates to a pressure sensitive adhesive sheet.

BACKGROUND ART

A general pressure sensitive adhesive sheet is constituted by a substrate, a pressure sensitive adhesive layer formed on the substrate, and a release material provided on the pressure sensitive adhesive layer depending on necessity, and in use, after removing the release material in the case where the release material is provided, the general pressure sensitive adhesive sheet is attached to an adherend by making the pressure sensitive adhesive layer into contact therewith.

A pressure sensitive adhesive sheet having a large attaching area, which may be used for identification or decoration, masking for painting, surface protection of a metal plate or the like, and the like, has a problem that on attaching the sheet to an adherend, air accumulation is liable to occur between the pressure sensitive adhesive layer and the adherend, and the portion with the air accumulation is recognized as "blister", so as to prevent the pressure sensitive adhesive sheet from being attached cleanly to the adherend.

For solving the problem, for example, PTL 1 describes a pressure sensitive adhesive sheet having grooves with a particular shape that are disposed artificially in a prescribed pattern on the surface of the pressure sensitive adhesive layer by making a release material having a fine emboss pattern into contact with the surface of the pressure sensitive adhesive layer.

There is described that, by using the pressure sensitive adhesive sheet, it is possible to escape the "air accumulation" formed on attaching to an adherend, to the exterior through the grooves formed artificially on the surface of the pressure sensitive adhesive layer.

Furthermore, PLT 2 relates to an adhesive film which contains elastic microspheres in its multilayer structure in order to achieve bubble escapability for the bubbles trapped between the adhesive and the adherent.

Similar, PTL 3 describes a thermally expandable pressure-sensitive adhesive layer containing thermally expandable microspheres, by which the adherent is firmly fixed to a body even if the body to be fixed to has an uneven surface.

PLT 4 deals with an adhesive film capable of reducing contamination of air bubbles in mutual adhesive members. The basic idea is formic an unevenness on the film surface. By the presence of the unevenness, air bubbles are omitted during contact bonding through the clearances of the unevenness.

Moreover, PLT 5 relates to a pressure-sensitive adhesive sheet which includes a support substrate, an inorganic fine particle-containing layer and a pressure-sensitive adhesive for preventing the appearance of blisters such as swollenness and floating when time passes if applied to a surface of various plastic molded products.

Similar, PLT 6 relates to an adhesive sheet which comprises a, substrate and an adhesive layer. The adhesive layer having a large number of projected portions and linear portions extended from each of the projected portions and connected to the other projected portions. Aim of the invention is to prevent or remove air reservoirs and blisters without using a release sheet having a large amount of small concave portions.

CITATION LIST

PATENT LITERATURE

PTL 1: JP 2001-507732 A
PTL 2: US 6 294 250 B1
PTL 3: JP 2009 035609 A
PTL 4: JP 2002 275433 A
PTL 5: JP 2012 197332 A
PTL 6: JP 2008 150431 A

SUMMARY OF INVENTION

TECHNICAL PROBLEM

However, the pressure sensitive adhesive sheet having a pressure sensitive adhesive layer having grooves with a particular shape disposed in a prescribed pattern, as shown in PTL 1, has a problem that when the width of the grooves is small, it is difficult to vent the air, and when the width of the grooves is large, not only the surface of the substrate is dented to deteriorate the appearance, but also the pressure sensitive adhesive strength is lowered.

In the pressure sensitive adhesive sheet, the grooves disposed in a prescribed pattern deteriorate the pressure sensitive adhesive strength locally in the portion having the grooves disposed, and after attaching the pressure sensitive adhesive sheet to an adherend, there is a possibility that the sheet is detached therefrom in the portion.

In the case where the pressure sensitive adhesive sheet is attached to an adherend and then peeled again therefrom, there is a possibility of adhesive deposits remaining on the adherend depending on the peeling direction of the pressure sensitive adhesive sheet since the pressure sensitive adhesion characteristics of the pressure sensitive adhesive sheet varies locally. For example, in the case where the pressure sensitive adhesive sheet having the pressure sensitive adhesive layer wherein the grooves of a lattice pattern is disposed is peeled obliquely, there is a possibility of adhesive deposits remaining on the adherend.

Furthermore, in the case where the pressure sensitive adhesive sheet is punched out, there is a possibility that the disposition pattern of the grooves overlaps the punching pattern. In this case, the cutting depth may fluctuate to provide a problem that a cut line cannot be suitably formed in the pressure sensitive adhesive sheet.

In general, such a process step of forming a trigger for peeling in order to facilitate the peeling of the release material (i.e., a so-called back slit) by only cutting a release material provided on the pressure sensitive adhesive sheet may be performed In the case where the above step is performed, it is the general procedure that the release material is once peeled off from the pressure sensitive adhesive sheet, and after putting notches in the release material, the release material and the pressure sensitive adhesive layer of the pressure sensitive adhesive sheet are again laminated with each other.

In the pressure sensitive adhesive sheet described in PTL 1, however, due to the use of an embossed liner as the release material, it is necessary to provide a separate release material that is not embossed. Because, it is difficult to follow to the emboss pattern of the release material when laminating again the release material and the pressure sensitive adhesive layer.

In PTL 1, further, for forming a minute structure in the pressure sensitive adhesive layer, such a method is used that the pressure sensitive adhesive layer is once formed by coating a pressure sensitive adhesive on the embossed liner, and then the pressure sensitive adhesive layer and a substrate are laminated (i.e., a so-called transfer coating method). However, in the case where a substrate having a surface with low polarity, such as a polyolefin substrate, is used, sufficient adhesiveness cannot be obtained between the substrate and the pressure sensitive adhesive layer by the method.

Moreover, as different from a release material formed of paper, a release material formed of a resin film is difficult to form a fine emboss pattern to a pressure sensitive adhesive layer.

In addition, the pressure sensitive adhesive sheet described in PTL 1 is inferior in blister resistance, and thus has a problem that blister is liable to occur in the case where the sheet is used at a high temperature.

An object of the present invention is to provide a pressure sensitive adhesive sheet that has an excellent air escape property capable of easily removing air accumulation that may be formed on attaching to an adherend, and is excellent in blister resistance and pressure sensitive adhesion characteristics.

SOLUTION TO PROBLEM

The present inventors have found that a pressure sensitive adhesive sheet having a resin layer that includes a resin part containing a resin as a main component and a particle part consisting of fine particles, in which the resin layer has, as existing in a predetermined region that is arbitrarily selected on a pressure sensitive adhesive surface of the resin layer, plural concave portions having a maximum height difference of 0.5 $\mu$m or more and having shapes that differ from each other, in a predetermined ratio, and in which the areal ratio of the part of the surface that is attached to a smooth surface of a light transmissive adherent falls within a specific range can, solve the above-mentioned problems, and have completed the present invention.

Specifically, the present invention provides a pressure sensitive adhesive sheet containing, on a substrate or a release material, a resin layer that includes a resin part (X) containing a resin as a main component, and a particle part (Y) consisting of silica particles, wherein the volume-average secondary particle diameter of the silica particles determined by measuring the particle size distribution according to a Coulter method is 0.5 to 10 $\mu$m, and wherein the resin layer contains a multi-layer structure containing a layer (X$\beta$) mainly containing the resin part (X), a layer (Y1) containing the particle part (Y) in an amount of 15% by mass or more, and a layer (X$\alpha$) mainly containing the resin part (X), as laminated in this order from the side on which the substrate or the release material is provided, at least a surface ($\alpha$) of the resin layer being opposite to the side thereof on which the substrate or the release material is provided having pressure sensitive adhesiveness, wherein plural concave portions having a maximum height difference of 0.5 $\mu$m or more exist in a region (P) surrounded by a square having an edge length of 5 mm that is arbitrarily selected on the surface ($\alpha$), and 95% or more of the plural concave portions existing inside the region (P) have shapes differing from each other, and

when the surface ($\alpha$) of the resin layer is attached to a smooth surface of a light transmissive adherend having a smooth surface, which means a surface whose centerline mean roughness ($Ra_{75}$) defined in JIS B0601:2001 is 0.1 $\mu$m or less, and a characteristic of having a total light transmittance of 70% or more as measured according to JIS K7105, the areal ratio of the attached area against the smooth surface of the light transmissive adherend to the surface ($\alpha$) is 10 to 95%.

The pressure sensitive adhesive sheet according to the above, wherein the plural concave portions exist irregularly on the surface ($\alpha$).

The pressure sensitive adhesive sheet according to the above, wherein the shape of the attached area has an irregular shape.

The pressure sensitive adhesive sheet according to the above, wherein the resin contained in the resin part (X) contains a pressure sensitive adhesive resin.

The pressure sensitive adhesive sheet according to the above, wherein the resin contained in the resin part (X) contains a resin having a functional group.

The pressure sensitive adhesive sheet according to the above, wherein the resin having a functional group is an acrylic resin having a functional group.

The pressure sensitive adhesive sheet according to the above, wherein the functional group is a carboxyl group.

The pressure sensitive adhesive sheet according to the above, wherein the resin part (X) further contains at least one or more selected from a metal chelate crosslinking agent, an epoxy crosslinking agent and an aziridine crosslinking agent.

The pressure sensitive adhesive sheet according to the above, wherein the resin part (X) contains both a metal chelate crosslinking agent and an epoxy crosslinking agent.

The pressure sensitive adhesive sheet according to the above, wherein the surface ($\beta$) of the resin layer on the side on which the substrate or the release material is provided has pressure sensitive adhesiveness.

The pressure sensitive adhesive sheet according to the above, which has the resin layer on the release material.

The pressure sensitive adhesive sheet according to the above, wherein the content (% by mass) of the silica particles contained in the resin layer is 3 to 90% by mass, and the content (% by mass) of the silica particles contained in the resin layer was calculated by the following expression:

$$\text{content (\% by mass) of the silica particles contained in the resin layer} = ((\text{mass of resin layer after heating at 800°C for 30 minutes})/(\text{mass of resin layer before heating})) \times 100.$$

The pressure sensitive adhesive sheet according to the above, wherein the one or more concave portions are not formed by transferring an emboss pattern.

The pressure sensitive adhesive sheet according to the above, wherein:

the layer (X$\beta$) is a layer formed by a composition (x$\beta$) containing the resin as a main component,
the layer (Y1) is a layer formed by a composition (y) containing the silica particles in an amount of 15% by mass or more, and
the layer (X$\alpha$) is a layer formed by a composition (x$\alpha$) containing the resin as a main component.

A method for producing a pressure sensitive adhesive sheet according to the above, which includes at least the following steps (1A) and (2A):

step (1A): a step of forming, on a substrate or a release material, a coating film (x$\beta$') formed by the composition (x$\beta$) containing the resin as a main component, a coating film (y') formed by the composition (y) containing the silica particles in an amount of 15% by mass or more and a coating film (x$\alpha$') formed by the composition (x$\alpha$) containing the resin as a main component, by laminating in this order; and
step (2A): a step of drying the coating film (x$\beta$'), the coating film (y') and the coating film (x$\alpha$') formed in the step (1A) simultaneously.

A method for producing a pressure sensitive adhesive sheet according to the above [16], which includes at least the following steps (1B) and (2B):

step (1B): a step of forming, on a layer (Xβ) mainly containing a resin part (X) that is provided on a substrate or a release material, a coating film (y') formed by the composition (y) containing the silica particles in an amount of 15% by mass or more and a coating film (xα') formed by the composition (xα) containing the resin as a main component, by laminating in this order; and

step (2B): a step of drying the coating film (y') and the coating film (xα') formed in the step (1B) simultaneously.

ADVANTAGEOUS EFFECTS OF INVENTION

The pressure sensitive adhesive sheet of the present invention has excellent air escape property capable of readily removing air accumulation that may form when the pressure sensitive adhesive sheet is adhered to an adherend, and has good blister resistance and adhesion characteristics.

BRIEF DESCRIPTION OF DRAWINGS

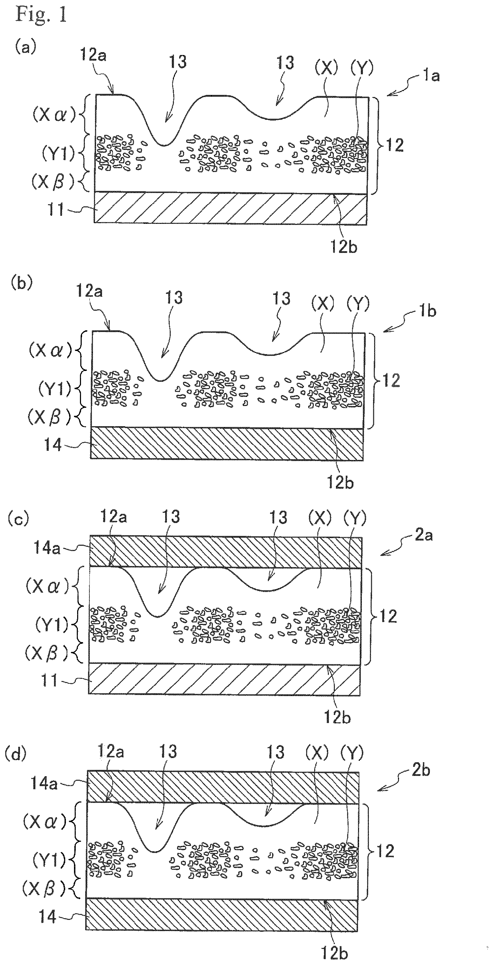

Fig. 1 is a schematic cross sectional view showing an example of the structure of the pressure sensitive adhesive sheet of the present invention.

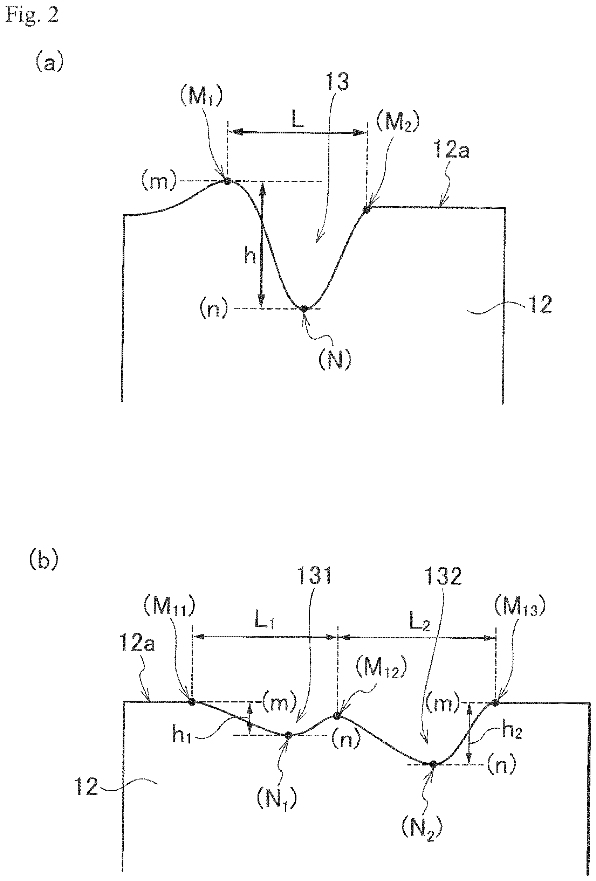

Fig. 2 is a schematic cross sectional view showing an example of the shape of the resin layer on the side of the surface (α) of the pressure sensitive adhesive sheet of the present invention.

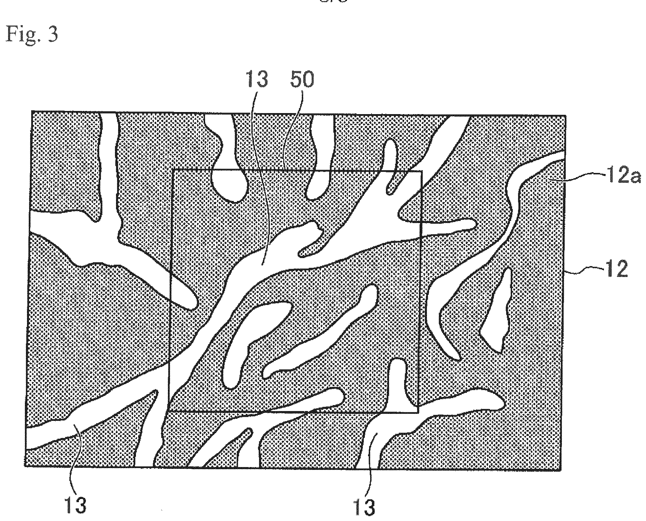

Fig. 3 is a schematic plan view showing an example of the surface (α) of the resin layer of the pressure sensitive adhesive sheet of the present invention.

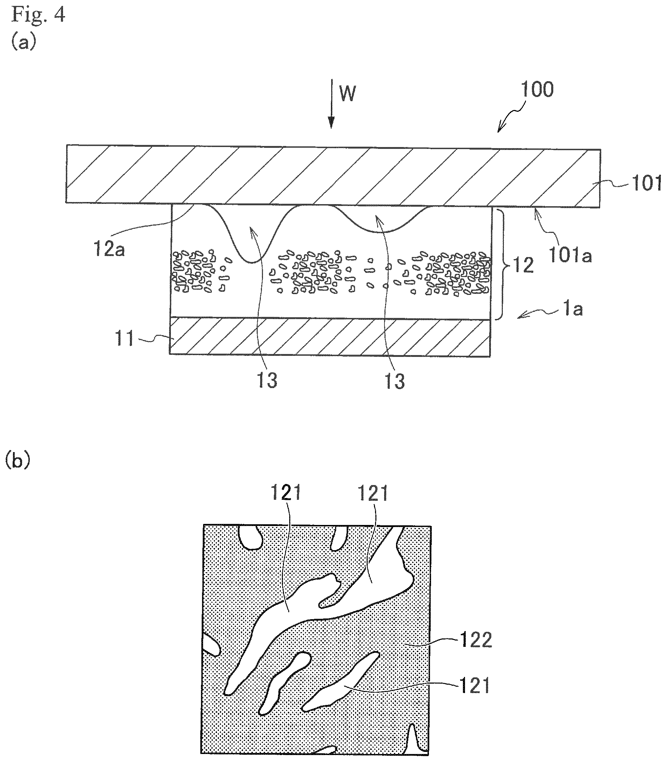

Fig. 4 is a schematic illustration showing the method for measuring the area ratio of the attached area to a smooth surface of a light transmissive adherend in the surface (α) of the resin layer on attaching the surface (α) to the smooth surface of the light transmissive adherend.

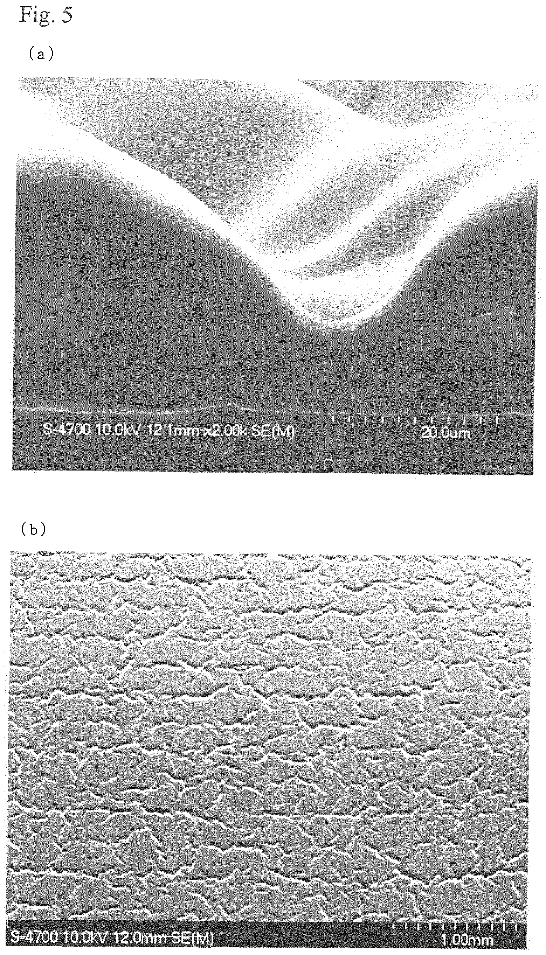

Fig. 5 is images obtained by observing the pressure sensitive adhesive sheet produced in Example 1 with a scanning electron microscope, in which (a) of Fig. 5 is a cross sectional image of the pressure sensitive adhesive sheet, and (b) of Fig. 5 is a perspective image of the surface (α) of the resin layer of the pressure sensitive adhesive sheet.

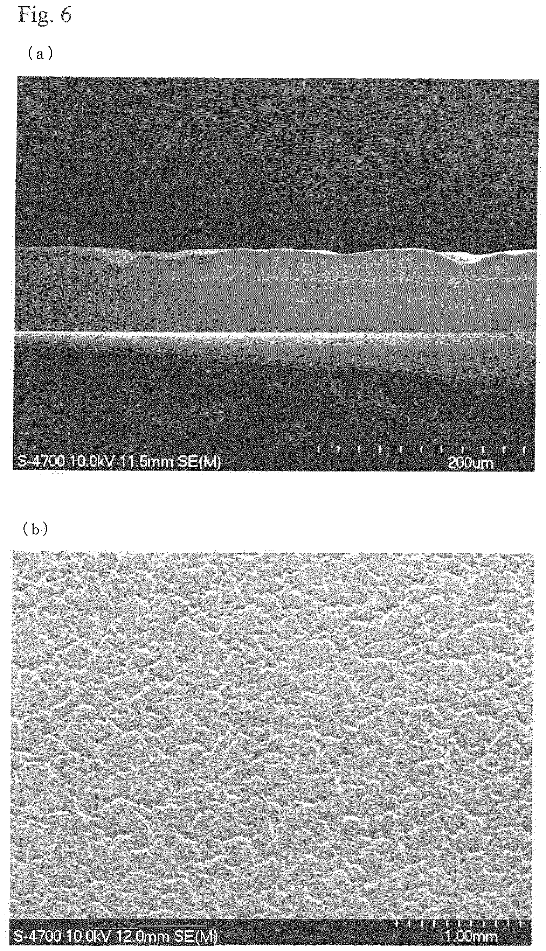

Fig. 6 is images obtained by observing the pressure sensitive adhesive sheet produced in Example 10 with a scanning electron microscope, in which (a) of Fig. 6 is a cross sectional image of the pressure sensitive adhesive sheet, and (b) of Fig. 6 is a perspective image of the surface (α) of the resin layer of the pressure sensitive adhesive sheet.

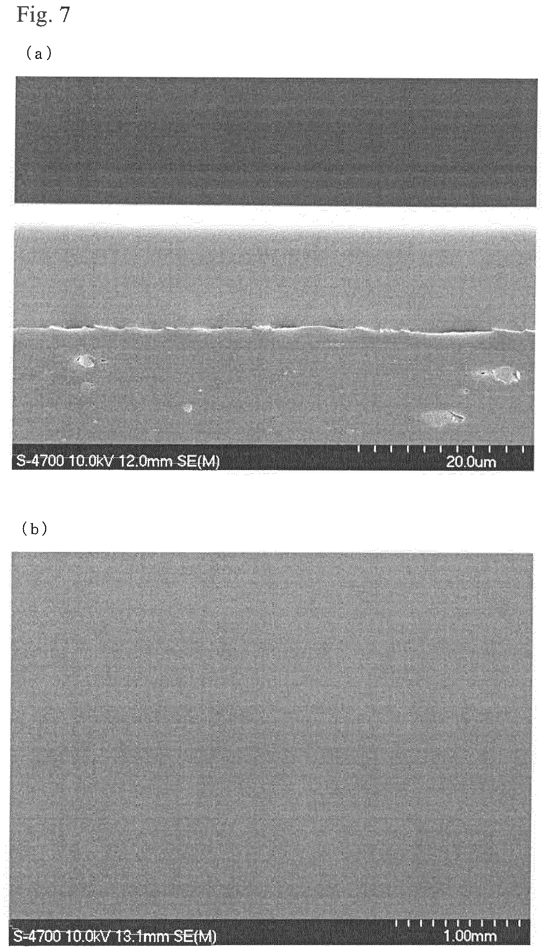

Fig. 7 is images obtained by observing the pressure sensitive adhesive sheet produced in Comparative Example 1 with a scanning electron microscope, in which (a) of Fig. 7 is a cross sectional image of the pressure sensitive adhesive sheet, and (b) of Fig. 7 is a perspective image of the surface (α) of the resin layer of the pressure sensitive adhesive sheet.

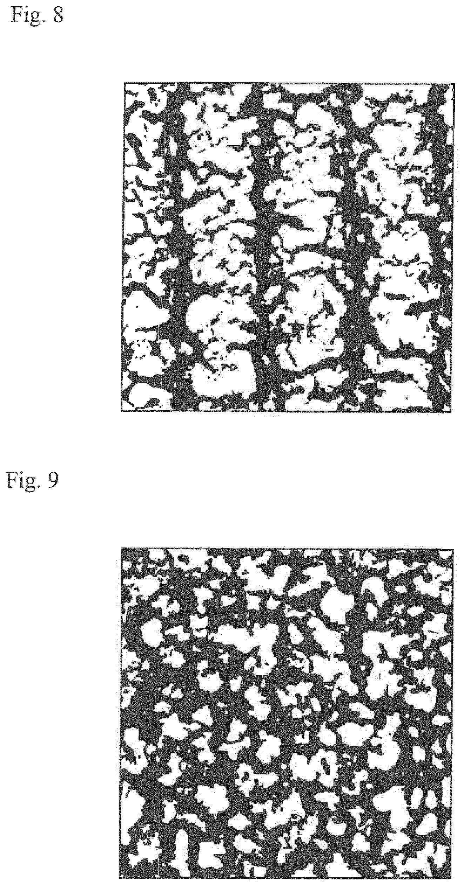

Fig. 8 is a binary image obtained in such a manner that the surface (α) of the resin layer of the pressure sensitive adhesive sheet produced in Example 1 is attached to a smooth surface of a light transmissive adherend, a digital image is obtained by observing the surface (α) from the side of the light transmissive adherend, and a region surrounded by a square having an edge length of 2 mm that is arbitrarily selected on the digital image is subjected to an image processing (binary processing).
Fig. 9 is a binary image obtained in such a manner that the surface (α) of the resin layer of the pressure sensitive adhesive sheet produced in Example 10 is attached to a smooth surface of a light transmissive adherend, a digital image is obtained by observing the surface (α) from the side of the light transmissive adherend, and a region surrounded by a square having an edge length of 2 mm that is arbitrarily selected on the digital image is subjected to an image processing (binary processing).

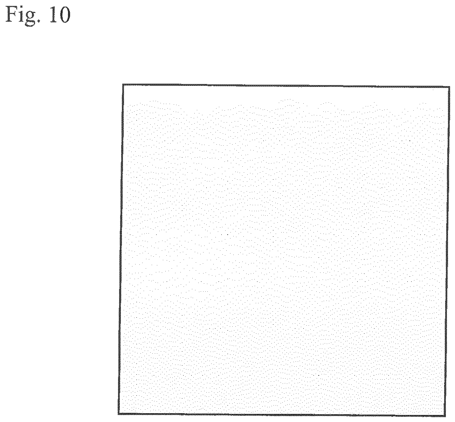

Fig. 10 is a binary image obtained in such a manner that the surface (α) of the resin layer of the pressure sensitive adhesive sheet produced in Comparative Example 1 is attached to a smooth surface of a light transmissive adherend, a digital image is obtained by observing the surface (α) from the side of the light transmissive adherend, and a region surrounded by a square having an edge length of 2 mm that is arbitrarily selected on the digital image is subjected to an image processing (binary processing).

DESCRIPTION OF EMBODIMENTS

In the present invention, for example, an expression "YY containing a component XX as a main component" or an expression "YY mainly containing a component XX" means that "among the components contained in YY, a component having a largest content is the component XX". A concrete content of the component XX in this expression is generally 50% by mass or more, and is preferably 65 to 100% by mass, more preferably 75 to 100% by mass, even more preferably 85 to 100% by mass, relative to the total amount (100% by mass) of YY

In the present invention, for example, "(meth)acrylic acid" indicates both "acrylic acid" and "methacrylic acid", and the same shall apply to other similarity terms.

Regarding a preferred numerical range (for example, a range of content or the like), a lower limit and an upper limit that are expressed in stages can be combined each independently. For example, from an expression of "preferably 10 to 90, more preferably 30 to 60", "the preferred lower limit (10)" and "the preferred upper limit (60)" may be combined to be "10 to 60".

[Configuration of Pressure sensitive Adhesive Sheet]

First, the constitution of the pressure sensitive adhesive sheet of the present invention is described.

The pressure sensitive adhesive sheet of the present invention has, on a substrate or a release material, a resin layer that includes a resin part (X) containing a resin as a main component, and a particle part (Y) consisting of silica particles.

Fig. 1 includes schematic cross-sectional views of pressure sensitive adhesive sheets, showing examples of a configuration of the pressure sensitive adhesive sheet of the present invention.

As specific configurations of a pressure sensitive adhesive sheet that are embodiments of the present invention, for example, there are mentioned a pressure sensitive adhesive sheet 1a having a resin layer 12 on a substrate 11 as shown by Fig. 1(a), and a pressure sensitive adhesive sheet 1b having a resin layer 12 on a release material 14 as shown by Fig. 1(b).

In the pressure sensitive adhesive sheet of the present invention, at least a surface ($\alpha$) 12a of the resin layer 12 on the side opposite to the side on which the substrate 11 or the release material 14 is provided (hereinafter this may be simply referred to as "surface ($\alpha$)") has pressure sensitive adhesiveness.

Accordingly, from the viewpoint of handleability, the pressure sensitive adhesive sheet of the embodiment of the present invention preferably has a configuration of a pressure sensitive adhesive sheet 2a or 2b as shown by Fig. 1 (c) or (d), where a release material 14a is further arranged on the surface ($\alpha$) 12a of the resin layer 12 in the pressure sensitive adhesive sheet 1a or 1b shown in Fig. 1.

In the pressure sensitive adhesive sheet of the embodiment of the present invention, the surface ($\beta$) 12b of the resin layer 12 on the side which the substrate 11 or the release material 14 is provided (hereinafter this may be simply referred to as "surface ($\beta$)") may also be adhesive. When the surface ($\beta$) is also adhesive, in the pressure sensitive adhesive sheet 1a or 2a shown by Fig. 1 (a) or (c), the adhesion between the resin layer 12 and the substrate 11 can be good, and the pressure sensitive adhesive sheet 1b or 2b shown by Fig. 1 (b) or (d) may be a double-sided adhesive sheet.

The resin layer 12 that the pressure sensitive adhesive sheet of the present invention has is a layer that contains a resin part (X) containing a resin as a main component, and a particle part (Y) consisting of silica particles, and the surface ($\alpha$) 12a of the resin layer 12 has concave portions 13 existing thereon.

Since the resin layer contains the particle part (Y), the resultant pressure sensitive adhesive sheet can effectively prevent formation of blisters when used at high temperatures.

In addition, the concave portions 13 existing on the surface ($\alpha$) also play a role of air-discharge channels for removing outside the "air accumulation" to be formed in adhering the surface ($\alpha$) of the resin layer of the pressure sensitive adhesive sheet of the present invention to an adherend.

The length of the concave portion 13 in a planar view of the concave portion 13 existing on the surface ($\alpha$) is not specifically limited. Namely, the concave portion 13 includes relatively long groove-like one and a relatively short pit-like one.

Regarding the distribution pattern of the resin part (X) and the particle part (Y) in the resin layer 12, the resin parts (X) and the particle parts (Y) may be distributed almost evenly as one pattern, or as a different pattern, an area mainly containing the resin parts (X) and an area mainly containing the particle parts (Y) may be locally divided.

In addition, as shown by Fig. 1 (a) to (d), in the area where the concave portions 13 exist on the surface ($\alpha$) of the resin layer 12, the pattern may be such that the proportion of the particle parts (Y) is smaller than in the other areas, or the particle parts (Y) may not be partly present.

The one or more concave portions on the surface ($\alpha$) of the resin layer that the pressure sensitive adhesive sheet of the present invention has differ from grooves that have pre-designed shapes, such as those formed to be formed through embossed pattern transfer, for example, those to be formed by pressing an embossed release material onto the surface of the resin layer.

Preferably, the one or more concave portions are formed through self-formation of the resin layer.

In the present invention, "self-formation" means a phenomenon of naturally forming a disorganized profile in a process of self-sustaining formation of a resin layer, and more precisely, means a phenomenon of naturally forming a disorganized profile in a process of self-sustaining formation of a resin layer by drying a coating film formed of a composition that is a forming material for a resin layer.

Namely, the one or more concave portions formed through self-formation of the resin layer are ones formed in the step of drying the coating film formed of the composition that is a forming material for the resin layer.

The shapes of the one or more concave portions thus formed through self-formation of the resin layer in the manner as above may be controlled in some degree by controlling the drying condition or the kind and the content of the component in the composition that is a forming material for the resin layer, but differ from grooves to be formed through embossed pattern transfer, and it may be said that "it is substantially impossible to reproduce exactly the same shapes".

In addition, the one or more concave portions are not those to be formed at previously determined positions, like grooves to be formed through embossed pattern transfer using a release material having an embossed pattern or the like.

The process of forming one or more concave portions on the surface ($\alpha$) of the resin layer that the pressure sensitive adhesive sheet of the present invention has is considered to be as follows.

First, during formation of a coating film of a composition that contains silica particles as a forming material for the particle part (Y), silica particles exist at random in the coating film.

Here, in the step of drying the coating film, contraction stress develops inside the coating film, and in the part where the bonding force of the resin would have attenuated owing to the presence of the silica particles therein, the coating film is cracked inside it. With that, it is considered that the resin around the cracked part may flow into the space temporarily formed by cracking to thereby form one or more concave portions on the surface ($\alpha$) of the resin layer.

In addition, it is considered that, in the drying step for the coating film, when cracks are formed inside the coating film, the silica particles originally having existed therein would be pushed away into other parts, and therefore the proportion of the particle part (Y) in the sites where the one or more concave portions are formed would be smaller than in the other sites.

The one or more concave portions are easy to form, for example, by separately forming a coating film of a composition having a high content of silica particles and having a low content of resin, and a coating film of a composition containing a resin as a main component, and drying the two coating films simultaneously.

It is considered that, when two coating films that differ in the resin content are formed and then the two coating films are dried simultaneously, a contraction stress difference could be generated inside the coating films being dried, and the coating films could be thereby readily cracked.

From the viewpoint of readily forming the one or more concave portions, it is recommended to control the condition appropriately in consideration of the following matters. It is considered that these matters could react with each other in a complex form to facilitate the formation of the one or more concave portions. In this connection, preferred embodiments of the matters for facilitating the formation of the one or more concave portions are as described in the corresponding sections to be given hereinunder.

- The kind, constituent monomers, molecular weight and content of the resin contained in the composition of the forming material for the coating film.
- The kind of the crosslinking agent and the kind of the solvent contained in the composition of the forming material for the coating film.
- The viscosity and the solid concentration of the composition of the forming material for the coating film.
- The shape, kind and mass concentration of silica particles.
- The dispersion state of the silica particles in the composition of the forming material for the coating film and in the coating film, and the content of the silica particles.
- The thickness of the coating film to be formed (when plural layers are formed, the thickness of each coating film).
- The drying temperature and the drying time for the formed coating film.

In formation of the pressure sensitive adhesive layer in an ordinary pressure sensitive adhesive sheet, it is intended to form the pressure sensitive adhesive layer having a flat surface, and the above-mentioned matters are suitably settled in many cases.

On the other hand, in the present invention, the above matters are so settled that the one or more concave portions capable of contributing toward improvement of the air escape property of the pressure sensitive adhesive sheet can be formed, quite differing from those in the planning method for the pressure sensitive adhesive layer of ordinary pressure sensitive adhesive sheets.

Preferably, the above-mentioned matters are suitably settled in consideration of the flowability of the silica particles and the resin contained in the coating film to be formed.

For example, by controlling the viscosity of the coating film formed of a composition containing a large amount of silica particles to fall within a suitable range, it is possible to suitably prevent the formed coating film from being mixed with any other coating film (a coating film containing a large amount of resin) while the predetermined flowability of the silica particles in the coating film could be maintained as such. By such controlling, cracks could be readily formed in the horizontal direction to facilitate formation of one or more concave portions in the coating film containing a large amount of resin.

As a result, it may be possible to increase the proportion of the one or more concave portions to be formed on the surface ($\alpha$) and to increase the proportion of the one or more concave portions connecting to each other, thereby giving a pressure sensitive adhesive sheet having a more superior air escape property.

Among the above-mentioned matters, it is desirable to suitably control the kind, the constituent monomers and the molecular weight of the resin and the resin content so that the resin contained in the coating film containing a large amount of resin could have a suitable viscoelasticity.

Namely, by suitably increasing the hardness of the coating film (the hardness thereof that may be determined various factors such as the viscoelasticity of resin, the viscosity of the coating liquid, etc.), the contract stress of the resin part (X) increases to facilitate the formation of one or more concave portions. When the hardness of the coating film is higher, the contraction stress could be higher to facilitate the formation of one or more concave portions, but when the coating film is too hard, the coatability thereof may worsen. In addition, when the resin elasticity is increased too much, the adhesive strength of the resin layer to be formed from the coating film tends to lower. In consideration of these, it is desirable to suitably control the viscoelasticity of the resin.

It is considered that, by suitably selecting the silica particles and the resin to thereby make the dispersion condition of the silica particles appropriate, the degree of swelling of the thickness of the resin layer owing to the silica particles therein and the self-forming power of the one or more concave portions could be thereby controlled and, as a result, the one or more concave portions could be readily formed on the surface ($\alpha$).

Further, in consideration of the crosslinking speed of the formed coating film (or the composition of the forming material), it is desirable that the above-mentioned matters are suitably settled.

Namely, in the case where the crosslinking speed of the coating film is too high, the coating film would be cured before formation of one or more concave portions therein. In addition, in the case, there may be some influences on the degree of cracking of the coating film.

The crosslinking speed of the coating film may be controlled by suitably defining the kind of the crosslinking agent and the kind of the solvent in the composition of the forming material or by suitably settling the drying time and the drying temperature for the coating film.

It is desirable that the one or more concave portions existing on the surface ($\alpha$) of the resin layer that the pressure sensitive adhesive sheet of the present invention has do not have a predetermined pattern. Here, "predetermined pattern" means, when a shape of one concave portion is noted, the shape to be a certain repeating unit that the concave portion has.

From the viewpoint of providing a pressure sensitive adhesive sheet having an improved air escape property, it is desirable that the one or more concave portions existing on the surface ($\alpha$) of the resin layer that the pressure sensitive adhesive sheet of the present invention has could be visually recognized from the side of the surface ($\alpha$) of the exposed resin layer.

The pressure sensitive adhesive sheet of the present invention has, as shown by Fig. 1(a) to (d), plural concave portions 13 on the surface ($\alpha$) of the resin layer 12 being opposite to the side on which the substrate 11 or the release material 14 is provided.

With that, in the pressure sensitive adhesive sheet of the present invention, the plural concave portions 13 existing on the surface ($\alpha$) satisfies the following requirements (I) to (III).

Requirement (I): Plural concave portions having a maximum height difference of 0.5 $\mu$m or more exist in a region (P) surrounded by a square having an edge length of 5 mm that is arbitrarily selected on the surface ($\alpha$).

Requirement (II): 95% or more of plural concave portions having a maximum height difference of 0.5 $\mu$m or more existing inside a region (P) surrounded by a square having an edge length of 5 mm that is arbitrarily selected on the surface ($\alpha$) have shapes differing from each other.

Requirement (III): When the surface ($\alpha$) of the resin layer is attached to the smooth surface of a light transmissive adherend having a smooth surface, the areal ratio of the attached area against the smooth surface of the light transmissive adherend to the surface ($\alpha$) is 10 to 95%.

Further, one embodiment of the pressure sensitive adhesive sheet of the present invention satisfies the following requirement (IV).

Requirement (IV): Plural concave portions having a maximum height difference of 0.5 $\mu$m or more exist irregularly on the surface ($\alpha$).

The above requirements (I) to (IV) are described in detail hereinunder.

<Requirement (I)>

Fig. 2 includes schematic cross-sectional views of a resin layer, showing examples of a shape on the side of the surface ($\alpha$) of the resin layer that the pressure sensitive adhesive sheet of the present invention has.

Like the concave portion 13 shown in Fig. 2(a), the shape of an ordinary concave portion has two mountain parts ($M_1$) and ($M_2$) and a valley part (N). The "height difference" of the concave portion in the present invention means the length of the difference (h) between the highest position (m) of the two mountain parts ($M_1$) and ($M_2$) (in Fig. 2(a), the maximum point of the mountain part ($M_1$)) and the lowest position (n) thereof (in Fig. 2(a), the minimum point of the valley part (N)), relative to the thickness direction of the resin layer 12.

It is considered that the case of Fig 2(b) would have two concave portions of a concave portion 131 having two mountain parts ($M_{11}$) and ($M_{12}$) and a valley part ($N_1$), and a concave portion 132 having two mountain parts ($M_{12}$) and ($M_{13}$) and a valley part ($N_2$). In this case, the length of the difference (hi) between the maximum point of the mountain part ($M_{11}$) and the minimum point of the valley part ($N_1$) indicates the height difference of the concave portion 131, and the length of the difference ($h_2$) between the maximum point of the mountain part ($M_{13}$) and the minimum point of the valley part ($N_2$) indicates the height difference of the concave portion 132.

In the present invention, the "one or more concave portions" existing on the surface ($\alpha$) are the concave portions having a maximum height difference of 0.5 $\mu$m or more. The "concave portion" as defined in the present invention may be one having a site with a height difference of 0.5 $\mu$m or more in any part of the concave portion, and the concave portion needs not to have the height difference in the entire region thereof.

Regarding the presence or absence of plural concave portions satisfying the requirement (I), the region (P) surrounded by a square having an edge length of 5 mm that is arbitrarily selected on the surface ($\alpha$) of the resin layer of the pressure sensitive adhesive sheet is observed with an electronic microscope for the judgment. More specifically, the presence or absence is judged according to the method described in the section of Examples.

The maximum value of the height difference of one concave portion is, from the viewpoint of improving the air escape property of the pressure sensitive adhesive sheet, from the viewpoint of keeping the appearance of the pressure sensitive adhesive sheet good, and from the viewpoint of the shape stability of the pressure sensitive adhesive sheet, preferably 1.0 $\mu$m or more and not more than the thickness of the resin layer, more preferably 3.0 $\mu$m or more and not more than the thickness of the resin layer, and even more preferably 5.0 $\mu$m or more and not more than the thickness of the resin layer.

The ratio of the maximum height difference of plural concave portions existing inside the region (P) to the thickness of the resin layer [maximum height difference/thickness of resin layer] is preferably 1/100 to 100/100, more preferably 5/100 to 99/100, even more preferably 10/100 to 96/100, still more preferably 15/100 to 90/100.

The mean value of the width of the concave portions is, from the viewpoint of improving the air escape property of the pressure sensitive adhesive sheet and from the viewpoint of bettering the adhesiveness of the pressure sensitive adhesive sheet, preferably 1 to 500 $\mu$m, more preferably 3 to 400 $\mu$m, even more preferably 5 to 300 $\mu$m.

In the present invention, the width of the concave portion means the distance between the maximum points of the two mountain parts, and in the concave portion 13 shown in Fig. 2(a), the width indicates the distance L between the mountain part ($M_1$) and the mountain part ($M_2$). In the concave portion 131 shown in Fig. 2(b), the width indicates the distance $L_1$ between the mountain part ($M_{11}$) and the mountain part ($M_{12}$), and in the concave portion 132 therein, the width indicates the distance $L_2$ between the mountain part ($M_{13}$) and the mountain part ($M_{12}$).

In a planar view of the pressure sensitive adhesive sheet of the present invention (when the sheet is viewed from directly above), when the concave portion has a long wide and a short side, the short side is the width.

The ratio of the maximum height difference of one concave portion to the mean value of the width [maximum height difference/mean value of width) (in the concave portion 13 shown in Fig. 2(a), the ratio is "h/L") is, from the viewpoint of improving the air escape property of the pressure sensitive adhesive sheet and from the viewpoint of bettering the adhesiveness of the pressure sensitive adhesive sheet, preferably 1/500 to 100/1, more preferably 3/400 to 70/3, even more preferably 1/60 to 10/1.

<Requirement (II)>

Like the above-mentioned requirement (II), in the pressure sensitive adhesive sheet of the present invention, 95% or more of plural concave portions having a maximum height difference of 0.5 $\mu$m or more existing inside a region (P) surrounded by a square having an edge length of 5 mm that is arbitrarily selected on the surface ($\alpha$) have shapes differing from each other.

Fig. 3 shows one example of a schematic plan view of the surface ($\alpha$) of the resin layer that the pressure sensitive adhesive sheet of the present invention has. As shown in Fig. 3, in the pressure sensitive adhesive sheet of the present invention, the ratio of the concave portions that have shapes differing from each other to the plural concave portions 13 existing on the surface ($\alpha$) 12a of the resin layer 12 is extremely large.

Regarding the matter whether or not the requirement (II) is satisfied, for example, a pressure sensitive adhesive sheet having, on the surface of the pressure sensitive adhesive layer thereof, grooves as arranged in a predetermined pattern in a preplanned shape as described in PTL 1 is definitely differentiated from the pressure sensitive adhesive sheet of the present invention.

Regarding a heretofore-known pressure sensitive adhesive sheet having, on the surface of the pressure sensitive adhesive layer thereof, grooves as arranged in a predetermined pattern in a preplanned shape, even when at least one characteristic thereof selected from the air escape property, the outward appearance, the pressure sensitive adhesion characteristics and the punching property is tried to be improved by the shape of the grooves and the arrangement of the grooves, the other characteristics of the sheet are worsened in many cases.

The present inventors have specifically noted that, for example, the shape of the grooves capable of contributing toward improving air escape property and the shape of the grooves capable of improving pressure sensitive adhesive characteristics differs from each other, and have found out the technical meaning of satisfying the requirement (II).

Namely, in the pressure sensitive adhesive sheet of the present invention, the plural concave portions having shapes differing from each other and existing inside the region (P) on the surface ($\alpha$) of the resin layer differ from each other also in point of the contribution ratio of the air escape property, the outward appearance, the pressure sensitive adhesion characteristics and the punching property. Consequently, by forming such plural concave portions each having a different contribution ratio to those characteristics, the characteristics of the resultant pressure sensitive adhesive sheet can be thereby well balanced.

In one embodiment of the pressure sensitive adhesive sheet of the present invention, the ratio of the plural concave portions having shapes differing from each other and existing inside the region (P) on the surface ($\alpha$) of the resin layer is preferably 98% or more, and is more preferably 100%, relative to the total number (100%) of the concave portions existing inside the region (P).

In the present invention, the matter whether or not the requirement (II) is satisfied may be judged as follows. The shapes of the plural concave portions having a maximum height difference of 0.5 $\mu$m or more and existing inside the region (P) surrounded by a square having an edge length of 5 mm that is arbitrarily selected on the surface ($\alpha$) of the resin layer of the targeted pressure sensitive adhesive sheet are observed with an electronic microscope (magnification: 30 to 100), and when the number of the concave portions having shapes differing from each other is 95% or more (preferably 98% or more, more preferably 100%) relative to the total number (100%) of the plural concave portions existing inside the region (P), it is judged that the observed sheet is a pressure sensitive adhesive sheet having a resin layer where concave portions satisfying the above requirement (II) exist on the surface ($\alpha$) thereof. For the observation of the shapes of the plural concave portions, a method of directly observing the sheet with an electronic microscope having the above-mentioned magnification may be employed, or a method of taking a picture of the sheet using an electronic microscope having the above-mentioned magnification, and visually observing the shapes of the plural concave portions shown on the image may also be employed. More specifically, the satisfaction of the requirement may be judged according to the method described in the section of Examples.

Here, "the number of the concave portions having shapes differing from each other is 100%" means that "all the plural concave portions observed inside the region (P) have shapes differing from each other".

In this description, the concave portions connected uninterruptedly to each other in a selected region are counted as "one concave portion". However, when two concave portions existing in a selected region bonds to one concave portion in the other region adjacent to that selected region to form one concave portion, the two concave portions in the selected region should be counted as independent ones.


<Requirement (III)>

Like the requirement (III), when the surface ($\alpha$) of the resin layer of a pressure sensitive adhesive sheet of the present invention is attached to a smooth surface of a light transmissive adherend having a smooth surface, the areal ratio of the attached area against the smooth surface of the light transmissive adherend to the surface ($\alpha$) (hereinafter this may be simply referred to as "attached area" or "attached area against the surface ($\alpha$)") is 10 to 95%.

Here, when the areal ratio of the attached area is less than 10%, the adhesion face between the surface ($\alpha$) of the resin layer and the adherend could not be sufficiently secured so that the pressure sensitive adhesive characteristic may worsen to cause peeling. In addition, in the case, the appearance of the pressure sensitive adhesive sheet is poor.

On the other hand, when the areal ratio of the attached area is more than 95%, the air escape property of the pressure sensitive adhesive sheet would be insufficient and therefore, when the sheet is attached to an adherend, the resultant air accumulation would be difficult to remove.

From the above-mentioned viewpoints, the ratio of the attached area to the adherend is preferably 20 to 93%, more preferably 30 to 90%, even more preferably 35 to 85%, still more preferably 40 to 75%, further more preferably 45 to 70%.

The "light transmissive adherend having a smooth surface" in the requirement (III) is to merely define the adherend to be used in measurement of the areal ratio of the attached area in the surface ($\alpha$) defined in the requirement and is not intended to define the adherend that may be the object to which the pressure sensitive adhesive sheet is to be attached.

The adherend that may be the object to which the pressure sensitive adhesive sheet is to be attached is not specifically limited in point of the presence or absence of a smooth surface and in point of the presence or absence of translucency, and for example, it may be a non-light transmissive adhered having a curved surface.

The "smooth surface" in the requirement (III) means a surface whose centerline mean roughness ($Ra_{75}$) defined in JIS B0601:2001 is 0.1 $\mu$m or less.

The "translucency" in the requirement (III) means a characteristic having a total light transmittance of 70% or more as measured according to JIS K7105.

The shaping material for the light transmissive adherend in the requirement (III) is not specifically limited, but is, from the viewpoint of the ability to readily form the light transmissive adherend having a smooth surface as defined in the above, preferably glass.

In the present invention, ten regions of "an arbitrarily selected region surrounded by a square of 1 to 10 mm on a side" on the surface ($\alpha$) are selected, a value of the areal ratio of the attached area in each region is calculated according to the following operations (i) to (iii), and a mean value of the resultant data of the areal ratio of the attached area can be considered as the "areal ratio of the attached area of the surface ($\alpha$)" of the measured pressure sensitive adhesive sheet. More specifically, a mean value of the data of the areal ratio of the attached area calculated according to the method described in the section of Examples can also be considered as the "areal ratio of the attached area of the surface ($\alpha$)" of the measured pressure sensitive adhesive sheet.

Operation (i): As shown in Fig. 4(a), the pressure sensitive adhesive sheet to be measured is statically put on a smooth surface 101a of a light transmissive adhesive 101 formed of glass or the like, in such a manner that the surface ($\alpha$) 12a of the resin layer 12 that the pressure sensitive adhesive sheet has could be in contact with the smooth surface 101a. With that, on the side of the substrate or the release material of the pressure sensitive adhesive sheet, a 2-kg roller (an application device defined in JIS Z 0237:2000 10.2.4) is run by 5 reciprocating motions to thereby adhere the surface ($\alpha$) 12a of the resin layer 12 and the smooth surface 101a of the light transmissive adherend 101. Accordingly, a laminate 100 as arranged in the direction shown in Fig. 4(a) is obtained.

Operation (ii): On the side of the light transmissive adherend 101 of the laminate 100 obtained in the operation (i), an interface between the smooth surface 101a of the light transmissive adherend 101 and the surface ($\alpha$) 12a of the resin layer in an arbitrarily selected region on the surface ($\alpha$) 12a is photographed in the direction W in Fig. 4(a), using a digital microscope, thereby giving a digital image of the selected region.

Operation (iii): Using image analysis software, the resultant digital image is processed (binarization) to give a binarized image. With that, on the binarized image, the area S of the attached area that is in contact with the smooth surface of the light transmissive adherend in the total area of the selected region is determined. Next, based on a math formula "[areal ratio (%) of attached area] = S/total area of selected region $\times$ 100]", the areal ratio of the attached area to the light transmissive adherend in the selected region is calculated.

The kind of the light transmissive adherend to be used for the measurement and specific methods of the operations (i) to (iii) are as described in the section of Examples.

As the digital microscope, for example, "Digital Microscope VHX-1000" or "Digital Microscope VHX-5000", both trade names manufactured by Keyence Corporation may be used. Depending on the measurable magnifications of the digital microscope, the number of the areas to be measured may be increased and the areal ratio (%) of the attached area per area $mm^2$ may be calculated.

Here, one example of the shape of the attached area is described.

In a region (Q) surrounded by a square having an edge length of 1 mm 50 arbitrarily selected on the surface ($\alpha$) 12a of the resin layer shown in Fig. 3, the surface ($\alpha$) 12a is attached to the smooth surface 101a of the light transmissive adherend 101 as shown in Fig. 4(a), and the shape of the attached area inside the region (Q) surrounded by the square having an edge length of 1 mm 50 in Fig. 3, in a planar view in the direction W on the side of the light transmissive adherend 101 is discussed as an example. Fig. 4(b) is a view schematically showing one example of the shape of the attached area inside the selected region (Q).

The schematic view inside the region (Q) after the light transmissive adherend has been attached thereto in Fig. 4(b), and the schematic view inside the region (Q) surrounded by the square having an edge length of 1 mm 50 in Fig. 3 are compared with each other. It is known that the non-attached area 121 of the light transmissive adherend in Fig. 4(b) is smaller than the portion occupied by the concave portion 13 inside the region (Q) in Fig. 3. This is because, though the surface ($\alpha$) has pressure sensitive adhesiveness, the site having a relatively small height difference in the concave portion 13 is kept in contact with the smooth surface of the light transmissive adhesive when the surface ($\alpha$) is attached to the light transmissive adherend.

Namely, the shape of the non-attached area 121 to the smooth surface of the light transmissive adherend shown in Fig. 4(b) does not always conform with the shape of the portion occupied by plural concave portions 13 shown in Fig. 3.

In Fig. 4(b), the non-attached area 121 to the smooth surface of the light transmissive adherend is a site having a large height difference in the configuration of the concave portion 13. Accordingly, it may be said that, when the ratio of the non-attached area 121 is larger, the effect of expressing the air escape property to let "air accumulation" outside could be higher.

In Fig. 4(b), from the viewpoint of providing a pressure sensitive adhesive sheet having an increased air escape property, it is desirable that, when the surface ($\alpha$) of the resin layer is attached to the smooth surface of a light transmissive adherend having a smooth surface, the shape of the attached area 122 to the smooth surface of the light transmissive adherend in the surface ($\alpha$) of the resin layer (hereinafter this may be simply referred to as "shape of the attached area") could be visually recognized from the side of the light transmissive adherend.

The matter whether or not the shape of the attached area is visually recognized can be judged by whether or not the concave portions could be confirmed in visual observation in the direction W of the laminate 100 of Fig. 4(a) obtained in the operation (i).

Further, from the viewpoint of providing a pressure sensitive adhesive sheet having well-balanced characteristics of air escape property, appearance, adhesive characteristics and punching property, it is desirable that, in one embodiment of the pressure sensitive adhesive sheet of the present invention, when the surface ($\alpha$) of the resin layer is attached to the smooth surface of a light transmissive adherend having a smooth surface, the shape of the attached area to the smooth surface of the adherend in the surface ($\alpha$) of the resin layer has an irregular shape

The wording "the shape of the attached area has an irregular shape" means that in a planar view of the shape of the attached area, the shape of the attached area does not have any specific shape such as a shape surrounded by a circle or a line alone (triangle, square, etc.) but has an irregular shape with no similarities between the shapes of the individual attached areas, like the shape of the attached area 122 in Fig. 4(b). In other words, the shape of the attached area to be formed through embossed pattern transfer of pressing an embossed pattern-having release material to the surface of the resin layer could not be said to have "an irregular shape".

For the judgement whether or not the shape of the attached area has an irregular shape, in principle, the laminate 100 obtained in the above-mentioned operation (i) is observed visually or with a digital microscope in the direction W in Fig. 4(a).

However, like that for the calculation method for the areal ratio of the attached area, it is also possible that ten regions of "an arbitrarily selected region surrounded by a square of 1 to 10 mm on a side" on the surface ($\alpha$) are selected, and the 10 digital images obtained through the above-mentioned operations (i) and (ii) are processed for the judgement. Namely, in observation of the shape of the attached area in each region shown in each digital image, when all the digital images of those ten regions are so judged that the shape of the attached area therein has an irregular shape, it may be considered that "the shape of the attached area of the pressure sensitive adhesive sheet has an irregular shape".

<Requirement (IV)>

In one embodiment of the pressure sensitive adhesive sheet of the present invention, preferably, plural concave portions having a maximum height difference of 0.5 $\mu$m or more exist irregularly on the surface ($\alpha$) of the resin layer, like the above-mentioned requirement (IV).

In the present invention, the wording "plural concave portions exist irregularly" means a state where the positions of plural concave portions are at random not having the same repeating pattern (a state where the positions of plural concave portions do not have any periodicity). Namely, the above state differs from a state of "arrangement" based on specific regularity, like that for the grooves described in PTL 1, that is, like that for grooves formed through embossed pattern transfer of pressing a release material having an embossed pattern to the surface of a resin layer.

Irregular existence of plural concave portions provides a pressure sensitive adhesive sheet having well-balanced characteristics of air escape property and pressure sensitive adhesive characteristics.

For the judgement whether or not "plural concave portions exist irregularly", in principle, the positions of the plural concave portions existing on the surface ($\alpha$) of the resin layer of the targeted pressure sensitive adhesive sheet are identified through visual observation thereof or through observation thereof with a digital microscope or an electron microscope (magnification: 30 to 100).

However, for the judgement, it is also possible that, on the surface ($\alpha$), a region surrounded by an arbitrarily selected square of 1 to 10 mm on a side (preferably a region (P) surrounded by a square having an edge length of 5 mm) is selected, and the positions of the plural concave portions existing in the region are observed with a digital microscope or an electron microscope (magnification: 30 to 100 times). Namely, when the "positions of plural concave portions" existing inside the selected region do not have any specific regularity, the analyzed pressure sensitive adhesive sheet can be considered to satisfy the requirement (IV).

For the observation of the positions at which the plural concave portions are formed, a method of direct observation thereof with an electron microscope at the magnification as mentioned above may be employed, or a method of taking an image thereof with an electron microscope having the above-mentioned magnification, followed by visually observing the forming positions of the plural concave portions shown in the image may also be employed.

In the following, each constitution of the pressure sensitive adhesive sheet of the present invention will be described.

Substrate

The substrate used in one embodiment of the present invention is not particularly limited, and examples thereof include a paper substrate, a resin film or sheet, and a substrate containing a paper substrate laminated with a resin, which may be appropriately selected depending on the purpose of the pressure sensitive adhesive sheet according to one embodiment of the present invention.

Examples of paper constituting the paper substrate include thin paper, medium quality paper, wood-free paper, impregnated paper, coated paper, art paper, parchment paper, and glassine paper.

Examples of the resin constituting the resin film or sheet include a polyolefin resin, such as polyethylene and polypropylene; a vinyl resin, such as polyvinyl chloride, polyvinylidene chloride, polyvinyl alcohol, an ethylene-vinyl acetate copolymer, and an ethylene-vinyl alcohol copolymer; a polyester resin, such as polyethylene terephthalate, polybutylene terephthalate, and polyethylene naphthalate; polystyrene; an acrylonitrile-butadiene-styrene copolymer; cellulose triacetate; polycarbonate; a urethane resin, such as polyurethane and acrylic-modified polyurethane; polymethylpentene; polysulfone; polyether ether ketone; polyether sulfone; polyphenylenesulfide; a polyimide resin, such as polyether imide and polyimdie; a polyamide resin; an acrylic resin; and a fluorine resin.

Examples of the substrate containing a paper substrate laminated with a resin include laminated paper containing the aforementioned paper substrate laminated with a thermoplastic resin, such as polyethylene.

Among these substrates, a resin film or sheet is preferred, a film or sheet formed of a polyester resin is more preferred, and a film or sheet formed of polyethylene terephthalate (PET) is further preferred.

In the case where the pressure sensitive adhesive sheet of the present invention is applied to a purpose that requires heat resistance, a film or sheet constituted by a resin selected from polyethylene naphthalate and a polyimide resin is preferred, and in the case where the pressure sensitive adhesive sheet is applied to a purpose that requires weather resistance, a film or sheet constituted by a resin selected from polyvinyl chloride, polyvinylidene chloride, an acrylic resin, and a fluorine resin is preferred.

The thickness of the substrate may be appropriately determined depending on the purpose of the pressure sensitive adhesive sheet of the present invention, and is preferably from 5 to 1,000 $\mu$m, more preferably from 10 to 500 $\mu$m, further preferably from 12 to 250 $\mu$m, and still further preferably from 15 to 150 $\mu$m, from the standpoint of the handleability and the economic efficiency.

The substrate may further contain various additives, such as an ultraviolet ray absorbent, a light stabilizer, an antioxidant, an antistatic agent, a slipping agent, an antiblocking agent, and a colorant.

The substrate used in one embodiment of the present invention is preferably a non-air permeable substrate from the standpoint of enhancing the blister resistance of the resulting pressure sensitive adhesive sheet, and specifically a substrate containing the aforementioned resin film or sheet having a metal layer on the surface thereof.

Examples of the metal forming the metal layer include a metal having metallic gloss, such as aluminum, tin, chromium, and titanium.

Examples of the method of forming the metal layer include a method of vapor-depositing the metal by a PVD method, such as vacuum vapor deposition, sputtering, and ion plating, and a method of attaching a metal foil formed of the metal with an ordinary pressure sensitive adhesive, and a method of vapor-depositing the metal by a PVD method is preferred.

In the case where a resin film or sheet is used as the substrate, the surface of the resin film or sheet may be subjected to a surface treatment by an oxidizing method, a roughening method, and the like, or may be subjected to a primer treatment, from the standpoint of enhancing the adhesion to the resin layer to be laminated on the resin film or sheet.

Examples of the oxidizing method include a corona discharge treatment, a plasma discharge treatment, a chromic acid treatment (wet process), a hot air treatment, and an ozone treatment, and an ultraviolet ray irradiation treatment, and examples of the roughening treatment include a sand blasting treatment and a solvent treatment.

Release Material

The release material used in one embodiment of the present invention may be a release sheet having both surfaces subjected to a release treatment, and a release sheet having one surface subjected to a release treatment, and examples thereof include a substrate for the release material having coated thereon a release agent. The release treatment is preferably performed on a flat release material without a relief shape formed thereon (for example, a release material having no emboss pattern formed thereon).

Examples of the substrate for the release material include the paper substrate, the resin film or sheet, and the substrate containing a paper substrate laminated with a resin described above used as the substrate of the pressure sensitive adhesive sheet according to one embodiment of the present invention.

Examples of the release agent include a rubber elastomer, such as a silicone resin, an olefin resin, an isoprene resin, and a butadiene resin, a long-chain alkyl resin, an alkyd resin, and a fluorine resin.

The thickness of the release material is not particularly limited, and is preferably from 10 to 200 μm, more preferably from 25 to 170 μm, and further preferably from 35 to 80 μm.

[Resin Layer]

The resin layer that the pressure sensitive adhesive sheet of the present invention has contains a resin part (X) containing a resin as a main component and a particle part (Y) consisting of silica particles.

In the pressure sensitive adhesive sheet of the present invention, at least the surface (α) of the resin layer on the side opposite to the side on which at least substrate or a release material is provided has pressure sensitive adhesiveness, but the surface (β) of the resin layer on the side on which a substrate or a release material is provided may also has pressure sensitive adhesiveness.

As the resin layer, there may be mentioned a configuration of a layer having a multilayer structure formed by laminating a layer (Xβ) mainly containing a resin part (X), a layer (Y1) containing a particle part (Y) in a ratio of 15% by mass or more, and a layer (Xα) mainly containing a resin part (X) in this order from the side of a substrate or a release material, like in the pressure sensitive adhesive sheet 1a in Fig. 1.

The configuration of the multilayer structure mentioned above may also be a mixed layer configuration where the boundary between the layer (Xβ) and the layer (Y1), and/or the boundary between the layer (Y1) and the layer (Xα) could not be discerned.

The layer (Xβ) and the layer (Xα) are layers mainly containing the resin part (X) but may also contain a particle part (Y). However, the content of the particle part (Y) in the layer (Xβ) and the layer (Xα) is each independently less than 15% by mass relative to the total mass (100% by mass) of the layer (Xβ) or the layer (Xα) and is smaller than the content of the resin constituting the resin part (X).

The layer (Xβ) and the layer (Xα) may have a void part (Z) to be mentioned hereinunder, in addition to the resin part (X) and the particle part (Y).

The content of the resin in the layer (Xβ) and the layer (Xα) is each independently generally 50 to 100% by mass, and is preferably 65 to 100% by mass, more preferably 75 to 100% by mass, even more preferably 85 to 100% by mass, still more preferably 90 to 100% by mass, relative to the total mass (100% by mass) of the layer (Xβ) or the layer (Xα).

In the present invention, the "content of the resin in the layer (Xβ) and the layer (Xα)" may be considered to be the content of the resin in the total amount (100% by mass (but excluding diluent solvent)) of the resin composition that is the forming material for the layer (Xβ) or the layer (Xα).

The content of the silica particles constituting the particle part (Y) in the layer (Xβ) and the layer (Xα) is each independently less than 15% by mass relative to the total mass (100% by mass) of the layer (Xβ) or the layer (Xα), but is preferably 0 to 13% by mass, more preferably 0 to 10% by mass, even more preferably 0 to 5% by mass, still more preferably 0% by mass, relative to the total mass (100% by mass) of the layer (Xβ) or the layer (Xα).

In the present invention, the "content of the silica particles in the layer (Xβ) and the layer (Xα)" may be considered to be the content of the silica particles in the total amount (100% by mass (but excluding diluent solvent)) of the resin composition that is the forming material for the layer (Xβ) or the layer (Xα).

Preferably, the layer (Xβ) and the layer (Xα) each are a layer formed of a composition (xβ) or (xα) containing a resin as a main component to be mentioned hereinunder.

The layer (Y1) containing the particle part (Y) in a ratio of 15% by mass or more may be a layer formed of the particle part (Y) alone or may also be a layer containing the resin part (X) along with the particle part (Y), and may further has a void part (Z) to be mentioned hereinunder.

The content of the silica particles constituting the particle part (Y) in the layer (Y1) is 15% by mass or more relative to the total mass (100% by mass) of the layer (Y1), but is preferably 20 to 100% by mass, more preferably 25 to 90% by mass, even more preferably 30 to 85% by mass, still more preferably 35 to 80% by mass, relative to the total mass (100% by mass) of the layer (Y1).

In the present invention, the "content of the silica particles in the layer (Y1)" may also be considered to be the content of the silica particles in the total amount (100% by mass (but excluding diluent solvent)) of the composition that is the forming material for the layer (Y1).

The content of the resin in the layer (Y1) is generally 1 to 85% by mass, and is preferably 5 to 80% by mass, more preferably 10 to 75% by mass, even more preferably 20 to 70% by mass, still more preferably 25 to 65% by mass, relative to the total mass (100% by mass) of the layer (Y1).

In the present invention, the "content of the resin in the layer (Y1)" may also be considered to be the content of the resin in the total amount (100% by mass (but excluding diluent solvent)) of the composition that is the forming material for the layer (Y1).

Preferably, the layer (Y1) is formed of a composition (y) containing silica particles in a ratio of 15% by mass or more to be mentioned hereinunder.

Preferably, the resin layer that one embodiment of the pressure sensitive adhesive sheet of the present invention additionally has a void part (Z) in addition to the resin part (X) and the particle part (Y). The void part (Z), if any, in the resin layer can improve the blister resistance of the pressure sensitive adhesive sheet.

The void part (Z) includes the voids existing between the silica particles and, when the silica particles are secondary particles, the voids existing inside the secondary particles.

In the case where the resin layer has a multilayer structure, even though a void part (Z) exists in the process of forming the resin layer or just after formation of the layer, the resin part (X) may flow into the void part (Z) and therefore the voids may disappear to give a resin layer not having the void part (Z).

However, even in the case where a void part (Z) having existed in the resin layer for a period of time has disappeared, the resin layer that one embodiment of the pressure sensitive adhesive sheet of the present invention has may have concave portions on the surface ($\alpha$) and can be therefore excellent in air escape property and blister resistance.

The shear storage elastic modulus at 100°C of the resin layer that one embodiment of the pressure sensitive adhesive sheet of the present invention has is, from the viewpoint of improving the air escape property and the blister resistance of the pressure sensitive adhesive sheet, preferably $9.0 \times 10^3$ Pa or more, more preferably $1.0 \times 10^4$ Pa, even more preferably $2.0 \times 10^4$ Pa or more.

In the present invention, the shear storage elastic modulus at 100°C of the resin layer means a value measured with a viscoelastometer (for example, apparatus name "DYNAMIC ANALYZER RDA II" manufactured by Rheometrics Inc.) at a frequency of 1 Hz.

The thickness of the resin layer is preferably 1 to 300 $\mu$m, more preferably 5 to 150 $\mu$m, even more preferably 10 to 75 $\mu$m.

The adhesive strength of the surface ($\alpha$) of the resin layer of one embodiment of the pressure sensitive adhesive sheet of the present invention is preferably 0.5 N/25 mm or more, more preferably 2.0 N/25 mm or more, even more preferably 3.0 N/25 mm or more, further more preferably 4.0 N/25 mm or more, still further more preferably 7.0 N/25 mm or more.

In the case where the surface ($\beta$) of the resin layer also has pressure sensitive adhesiveness, the adhesive strength of the surface ($\beta$) preferably belongs to the above-mentioned range.

The value of the adhesive strength of the pressure sensitive adhesive sheet means a value measured according to the method described in the section of Examples.

<Resin Part (X)>

The resin part (X) constituting the resin layer contains a resin as a main component.

In the present invention, the resin part (X) is a part containing any other component than silica particles contained in the resin layer, and in this point, this is differentiated from the particle part (Y).

The resin part (X) contains a resin as a main component and may contain a crosslinking agent and ordinary additives in addition to resin.

The content of the resin in the resin part (X) is generally 40% by mass or more, and is preferably 50% by mass or more, more preferably 65% by mass or more, even more preferably 75% by mass or more, still more preferably 85% by mass or more, further more preferably 90% by mass or more, relative to the total amount (100% by mass) of the resin part (X), and is preferably 100% by mass or less, more preferably 99.9% by mass or less, relative to the total amount (100% by mass) of the resin part (X).

In the present invention, a value of the content of the resin in the resin composition to be the forming material for the resin part (X) may be considered to be the above-mentioned "content of the resin in the resin part (X)".

The resin to be contained in the resin part (X) is preferably a pressure sensitive adhesive resin from the viewpoint of making the surface ($\alpha$) of the resin layer to be formed express adhesiveness.

In particular, in the case where the resin layer has a multilayer structure formed by laminating a layer (X$\beta$), a layer (Y1) and a layer (X$\alpha$) in this order from the side on which a substrate or a release material is provided, like in the pressure sensitive adhesive sheet 1a of Fig. 1(a), it is desirable from the above-mentioned viewpoints that at least the layer (X$\alpha$) contains a pressure sensitive adhesive resin.

Examples of the pressure sensitive adhesive resin include acrylic resins, urethane resins, rubber resins, silicone resins, etc.

Among these adhesive resins, an acrylic resin is preferably contained from the viewpoint that the pressure sensitive adhesion characteristics and the weather resistance thereof are good and that plural concave portions satisfying the above-mentioned requirements (I) to (III) are easy to form on the surface ($\alpha$) of the resin layer to be formed.

The content of the acrylic resin is preferably 25 to 100% by mass, and is more preferably 50 to 100% by mass, even more preferably 70 to 100% by mass, still more preferably 80 to 100% by mass, further more preferably 100% by mass, relative to the total amount (100% by mass) of the resin contained in the resin part (X).

From the viewpoint that plural concave portions satisfying the above-mentioned requirements (I) to (III) are easy to form on the surface ($\alpha$) of the resin layer to be formed, it is desirable that the resin part (X) contains a resin having a functional group, more preferably an acrylic resin having a functional group.

In particular, in the case where the resin layer has a multilayer structure formed by laminating a layer (X$\beta$), a layer (Y1) and a layer (X$\alpha$) in this order from the side on which a substrate or a release material is provided, like in the pressure sensitive adhesive sheet 1a of Fig. 1(a), it is desirable from the above-mentioned viewpoints that at least the layer (Y1) contains a resin having a functional group.

The functional group is a group to be a crosslinking start point with a crosslinking agent, and examples thereof include a hydroxy group, a carboxy group, an epoxy group, an amino group, a cyano group, a keto group, an alkoxysilyl group, etc., but a carboxyl group is preferred.

Also preferably, the resin part (X) further contains a crosslinking agent along with the resin having a functional group. In particular, in the case where the resin layer has the above-mentioned multilayer structure, it is desirable that at least the layer (Y1) contains a crosslinking agent along with the above-mentioned, functional group-having resin.

Examples of the crosslinking agent include an isocyanate crosslinking agent, an epoxy crosslinking agent, an aziridine crosslinking agent, a metal chelate crosslinking agent, etc.

Examples of the isocyanate crosslinking agent include aromatic polyisocyanates such as tolylene diisocyanate, diphenylmethane diisocyanate, xylylene diisocyanate, etc.; aliphatic polyisocyanates such as hexamethylene diisocyanate, etc.; alicyclic polyisocyanates such as isophorone diisocyanate, hydrogenated diphenylmethane diisocyanate, etc.; biuret forms and isocyanurate forms of these compounds, and adduct forms that are reaction products with a low-molecular active hydrogen-containing compounds (ethylene glycol, propylene glycol, neopentyl glycol, trimethylolpropane, castor oil, etc.); etc.

Examples of the epoxy crosslinking agent include ethylene glycol glycidyl ether, 1,3-bis(N,N-diglycidylaminomethyl)cyclohexane, N,N,N',N'-tetraglycidyl-m-xylylenediamine, 1,6-hexanediol diglycidyl ether, trimethylolpropane diglycidyl ether, diglycidylaniline, diglycidylamine, etc.

Examples of the aziridine crosslinking agent include diphenylmethane-4,4'-bis(1-aziridinecarboxamide), trimethylolpropane-tri-$\beta$-aziridinylpropionate, tetramethylolmethane tri-$\beta$-aziridinylpropionate, toluene-2,4-bis(1-aziridinecarboxamide), tri ethyl enemelamine, bisisophthaloyl-1-(2-methylaziridine), tris-1-(2-methylaziridine) phosphine, trimethylolpropane tri-$\beta$-(2-methylaziridine)propionate, etc.

The metal chelate crosslinking agent includes chelate compounds where the metal atom is aluminium, zirconium, titanium, zinc, iron, tin or the like. From the viewpoint that plural concave portions satisfying the above requirements (I) to (III) are easy to form, an aluminium chelate crosslinking agent is preferred.

Examples of the aluminium chelate crosslinking agent include diisopropoxyaluminium monooleyl acetacetate, monoisopropoxyaluminium bisoleyl acetacetate, monoisopropoxyalumiium monooleate monoethylacetacetate, diisopropoxyaluminium monolauroyl acetacetate, diisopropoxyaluminium monostearyl acetacetate, diisopropoxyaluminium monoisostearyl acetacetate, etc.

One alone or two or more of these crosslinking agents may be used either singly or as combined.

Among these, from the viewpoint that plural concave portions satisfying the above requirements (I) to (III) are easy to form on the surface ($\alpha$) of the resin layer to be formed, it is desirable that the resin part (X) contains one or more selected from a metal chelate crosslinking agent, an epoxy crosslinking agent and an aziridine crosslinking agent, more preferably contains a metal chelate crosslinking agent, and even more preferably contains an aluminium chelate crosslinking agent.

The content of the crosslinking agent is preferably 0.01 to 15 parts by mass, and is more preferably 0.1 to 10 parts by mass, even more preferably 0.3 to 7.0 parts by mass, relative to 100 parts by mass of the resin having a functional group.

From the viewpoint of bettering the shape retentive force of the plural concave portions on the surface ($\alpha$) of the resin layer, it is desirable that the resin part (X) contains both a metal chelate crosslinking agent and an epoxy crosslinking agent.

In the case where the resin part (X) contains both a metal chelate crosslinking agent and an epoxy crosslinking agent, the content ratio by mass of the metal chelate crosslinking agent to the epoxy crosslinking agent [metal chelate crosslinking agent/epoxy crosslinking agent] in the resin part (X) is, from the above-mentioned viewpoints, preferably 10/90 to 99.5/0.5, more preferably 50/50 to 99.0/1.0, even more preferably 65/35 to 98.5/1.5, further more preferably 75/25 to 98.0/2.0.

The resin part (X) may contain any ordinary additive.

Examples of the ordinary additive include a tackifier, an antioxidant, a softener (plasticizer), a rust inhibitor, a pigment, a dye, a retardant, a reaction accelerator, a UV absorbent, etc.

One alone or two or more of these ordinary additives may be used either singly or as combined.

In the case where these ordinary additives are contained, the content of each ordinary additive is preferably 0.0001 to 60 parts by mass, and is more preferably 0.001 to 50 parts by mass, relative to 100 parts by mass of the resin.

One alone or two or more resins may be contained in the resin part (X) either singly or as combined.

The forming material for the resin part (X) of the resin layer that the pressure sensitive adhesive sheet of the present invention has is preferably a pressure sensitive adhesive containing a pressure sensitive adhesive resin having a functional group, more preferably an acrylic adhesive containing an acrylic resin (A) having a functional group (hereinafter this may be simply referred to as "acrylic resin (A)"), and even more preferably an acrylic adhesive containing a functional group-having acrylic resin (A) and a crosslinking agent (B).

The acrylic adhesive may be any of a solvent-type one or an emulsion-type one.

The acrylic adhesive favorable for the forming material for the resin part (X) is described below.

Examples of the acrylic resin (A) contained in the acrylic adhesive include a polymer having a structural unit derived from an alkyl (meth)acrylate having a linear or branched alkyl group, a polymer having a structural unit derived from a (meth)acrylate having a cyclic structure, etc.

The mass-average molecular weight (Mw) of the acrylic resin (A) is preferably 50,000 to 1,500,000, more preferably 150,000 to 1,300,000, even more preferably 250,000 to 1,100,000, still more preferably 350,000 to 900,000.

Preferably, the acrylic resin (A) contains an acrylic copolymer (A1) having a structural unit (a1) derived from an alkyl (meth)acrylate (a1') having an alkyl group with 1 to 18 carbon atoms (hereinafter this may be referred to as "monomer (a1')"), and a structural unit (a2) derived from a functional group-containing monomer (a2') (hereinafter this may be referred to as "monomer (a2')"), and more preferably contains an acrylic copolymer (A1).

The content of the acrylic copolymer (A1) is preferably 50 to 100% by mass, and is more preferably 70 to 100% by mass, even more preferably 80 to 100% by mass, further more preferably 90 to 100% by mass, relative to the total amount (100% by mass) of the acrylic resin (A) in the acrylic pressure sensitive adhesive.

The copolymerization morphology of the acrylic copolymer (A1) is not specifically limited, and the copolymer may be any of a block copolymer, a random copolymer or a graft copolymer.

The carbon number of the alkyl group that the monomer (a1') has is, from the viewpoint of improving pressure sensitive adhesion characteristics, more preferably 4 to 12, even more preferably 4 to 8, further more preferably 4 to 6.

Examples of the monomer (a1') include methyl (meth)acrylate, ethyl (meth)acrylate, propyl (meth)acrylate, butyl (meth)acrylate, 2-ethylhexyl (meth)acrylate, lauryl (meth)acrylate, tridecyl (meth)acrylate, stearyl (meth)acrylate, etc.

Among these, butyl (meth)acrylate and 2-ethylhexyl (meth)acrylate are preferred, and butyl (meth)acrylate is more preferred.

The content of the structural unit (a1) is preferably 50 to 99.5% by mass, and is more preferably 60 to 99% by mass, even more preferably 70 to 95% by mass, still more preferably 80 to 93% by mass, relative to all the structural units (100% by mass) of the acrylic copolymer (A1).

Examples of the monomer (a2') include a hydroxy group-containing monomer, a carboxy group-containing monomer, an epoxy group-containing monomer, an amino group-containing monomer, a cyano group-containing monomer, a keto group-containing monomer, an alkoxysilyl group-containing monomer, etc.

Among these, a carboxy group-containing monomer is more preferred.

The carboxy group-containing monomer includes (meth)acrylic acid, maleic acid, fumaric acid, itaconic acid, etc., and (meth)acrylic acid is preferred.

The content of the structural unit (a2) is preferably 0.5 to 50% by mass, and is more preferably 1 to 40% by mass, even more preferably 5 to 30% by mass, still more preferably 7 to 20% by mass, relative to all the structural units (100% by mass) of the acrylic copolymer (A1).

The acrylic copolymer (A1) may have a structural unit (a3) derived from any other monomer (a3') than the above-mentioned monomers (a1') and (a2').

Examples of the other monomer (a3') include (meth)acrylates having a cyclic structure such as cyclohexyl (meth)acrylate, benzyl (meth)acrylate, isobornyl (meth)acrylate, dicyclopentanyl (meth)acrylate, dicyclopentenyl (meth)acrylate, dicyclopentanyloxyethyl (meth)acrylate, imido(meth)acrylate, etc.; vinyl acetate, acrylonitrile, styrene, etc.

The content of the structural unit (a3) is preferably 0 to 30% by mass, and is more preferably 0 to 20% by mass, even more preferably 0 to 10% by mass, still more preferably 0 to 5% by mass, relative to all the structural units (100% by mass) of the acrylic copolymer (A1).

One alone or two or more of the above-mentioned monomers (a1') to (a3') may be used either singly or as combined.

A method for synthesis of the acrylic copolymer (A1) component is not specifically limited. For example, the copolymer may be produced according to a method including dissolving starting monomers in a solvent and polymerizing them in a mode of solution polymerization in the presence of a polymerization initiator, a chain transfer agent and the like, or a method of emulsion polymerization in an aqueous system using starting monomers in the presence of an emulsifier, a polymerization initiator, a chain transfer agent, a dispersant, etc.

The crosslinking agent (B) to be contained in the acrylic adhesive includes those mentioned hereinabove, but from the viewpoint of bettering pressure sensitive adhesion characteristics and from the viewpoint of facilitating the formation of plural concave portions satisfying the above-mentioned requirements (I) to (III) on the surface (α) of the resin layer to be formed, at least one or more selected from a metal chelate crosslinking agent, an epoxy crosslinking agent and an aziridine crosslinking agent are preferably contained, more preferably a metal chelate crosslinking agent is contained, and even more preferably an aluminium chelate crosslinking agent is contained.

From the viewpoint of bettering the shape retentivity of plural concave portions on the surface (α) of the resin layer, the crosslinking agent (B) preferably contains both a metal chelate crosslinking agent and an epoxy crosslinking agent.

The content of the crosslinking agent (B) is preferably 0.01 to 15 parts by mass, and is more preferably 0.1 to 10 parts by mass, even more preferably 0.3 to 7.0 parts by mass, relative to 100 parts by mass of the acrylic resin (A) in the acrylic adhesive.

In the case where a metal chelate crosslinking agent and an epoxy crosslinking agents are used as combined, the content ratio by mass of the metal chelate crosslinking agent to the epoxy crosslinking agent [metal chelate crosslinking agent/epoxy crosslinking agent] is preferably 10/90 to 99.5/0.5, more preferably 50/50 to 99.0/1.0, even more preferably 65/35 to 98.5/1.5, further more preferably 75/25 to 98.0/2.0.

The acrylic adhesive to be used in one embodiment of the present invention may contain any ordinary additive within a range not detracting from the advantageous effects of the present invention. The general additive includes those mentioned hereinabove, and the content of the ordinary additive is also as mentioned above.

The acrylic adhesive to be used in one embodiment of the present invention may contain any other adhesive resin than the acrylic resin (A) (for example, urethane resin, rubber resin, silicone resin, etc.) within a range not detracting from the advantageous effects of the present invention.

The content of the acrylic resin (A) in the acrylic adhesive is preferably 50 to 100% by mass, and is more preferably 70 to 100% by mass, even more preferably 80 to 100% by mass, still more preferably 100% by mass, relative to the total amount (100% by mass) of the pressure sensitive adhesive resin contained in the acrylic adhesive.

<Particle Part (Y)>

The particle part (Y) constituting the resin layer consists of silica particles.

The silica particles that are used in one embodiment of the present invention may be any ones of dry-method silica and wet-method silica.

The silica particles that are used in one embodiment of the present invention may also be an organic-modified silica that has been surface-modified with an organic compound having a reactive functional group or the like, an inorganic-modified silica that has been surface-treated with an inorganic compound such as sodium aluminate, sodium hydroxide or the like, as well as an organic/inorganic-modified silica that has been surface-treated with any of these organic compounds and inorganic compounds, or an organic/inorganic-modified silica that has been surface-treated with an organic/inorganic hybrid material of a silane coupling agent, etc.

These silica particles may be in the form of a mixture of two or more kinds.

The mass concentration of silica in the silica particles is preferably 70 to 100% by mass, and is more preferably 85 to 100% by mass, even more preferably 90 to 100% by mass, relative to the total amount (100% by mass) of the silica particles.

The volume-average secondary particle diameter of the silica particles that are used in one embodiment of the present invention is, from the viewpoint of improving the air escape property and the blister resistance of the pressure sensitive adhesive sheet, and from the viewpoint of facilitating the formation of plural concave portions satisfying the above requirements (I) to (III) on the surface (α) of the resin layer to be formed, preferably 0.5 to 10 μm, more preferably 1 to 8 μm, even more preferably 1.5 to 5 μm.

In the present invention, the value of the volume-average secondary particle diameter of the silica particles is a value determined through measurement of particle size distribution according to a Coulter counter method using Multisizer III or the like.

The mass retention rate after heating the resin layer that one embodiment of the pressure sensitive adhesive sheet of the present invention has, at 800°C for 30 minutes is preferably 3 to 90% by mass, more preferably 5 to 80% by mass, even more preferably 7 to 70% by mass, still more preferably 9 to 60% by mass.

The mass retention rate can be considered to indicate the content (% by mass) of the silica particles contained in the resin layer.

When the mass retention rate is 3% by mass or more, the pressure sensitive adhesive sheet can be excellent in air escape property and blister resistance. In addition, in production of the pressure sensitive adhesive sheet of the present invention, plural concave portions satisfying the requirements (I) to (III) can be readily formed on the surface ($\alpha$) of the resin layer to be formed. On the other hand, when the mass retention rate is 90% by mass or less, a pressure sensitive adhesive sheet can be provided in which the film strength of the resin layer is high and which is excellent in water resistance and chemical resistance.

[Production Method for Pressure sensitive Adhesive Sheet]

A production method for the pressure sensitive adhesive sheet of the present invention is described below.

The production method for the pressure sensitive adhesive sheet of the present invention is not specifically limited, but from the viewpoint of productivity and from the viewpoint of facilitating the formation of plural concave portions satisfying the above requirements (I) to (III) on the surface ($\alpha$) of the resin layer to be formed, a method having at least the following steps (1) and (2) is preferred.

Step (1): a step of forming a coating film (x') of a composition (x) containing a resin as a main component, and a coating film (y') of a composition (y) containing silica particles in an amount of 15% by mass or more
Step (2): a step of drying the coating film (x') and the coating film (y') formed in the step (1) simultaneously

<Step (1)>

The step (1) is a step of forming a coating film (x') of a composition (x) containing a resin as a main component, and a coating film (y') of a composition (y) containing silica particles in an amount of 15% by mass or more.

The composition (x) is a forming material for the resin part (X), and preferably contains a crosslinking agent along with the above-mentioned resin, and may further contain the above-mentioned ordinary additive.

The composition (y) is a forming material for the particle part (Y), and may contain a resin and a crosslinking agent, as well as the above-mentioned ordinary additive. The composition (y) containing those components of resin and others could also be a forming material for the resin part (X).

(Composition (x))

The resin contained in the composition (x) includes a resin that constitutes the above-mentioned resin part (X), and is preferably a pressure sensitive adhesive resin having a functional group, more preferably the above-mentioned functional group-having acrylic resin (A), and is preferably the above-mentioned acrylic copolymer (A1).

The content of the resin in the composition (x) is generally 40% by mass or more, and is preferably 50% by mass or more, more preferably 65% by mass or more, even more preferably 75% by mass or more, still more preferably 85% by mass or more, further more preferably 90% by mass or more, relative to the total amount (100% by mass (but excluding diluent solvent)) of the composition (x), and is preferably 100% by mass or less, more preferably 95% by mass or less, relative to the total amount (100% by mass (but excluding diluent solvent)) of the composition (x).

The crosslinking agent contained in the composition (x) includes the crosslinking agent contained in the above-mentioned resin part (X). Preferably, one or more selected from a metal chelate crosslinking agent, an epoxy crosslinking agent and an aziridine crosslinking agent are contained, and more preferably a metal chelate crosslinking agent is contained.

Further, from the viewpoint of bettering the shape retentivity of the plural concave portions on the surface ($\alpha$) of the resin layer to be formed, it is desirable that the composition (x) contains both a metal chelate crosslinking agent and an epoxy crosslinking agent.

In the case where the composition (x) contains both a metal chelate crosslinking agent and an epoxy crosslinking agent, the content ratio by mass of the metal chelate crosslinking agent to the epoxy crosslinking agent in the composition (x) [metal chelate crosslinking agent/epoxy crosslinking agent] is preferably 10/90 to 99.5/0.5, more preferably 50/50 to 99.0/1.0, even more preferably 65/35 to 98.5/1.5, still more preferably 75/25 to 98.0/2.0.

The content of the crosslinking agent is preferably 0.01 to 15 parts by mass, and is more preferably 0.1 to 10 parts by mass, even more preferably 0.3 to 7.0 parts by mass, relative to 100 parts by mass of the resin contained in the composition (x).

Preferably, the composition (x) is an acrylic pressure sensitive adhesive containing the above-mentioned functional group-having acrylic resin (A) and crosslinking agent (B), more preferably an acrylic adhesive containing the above-mentioned acrylic copolymer (A1) and crosslinking agent (B).

The details of the acrylic adhesive are as mentioned above.

The composition (x) may contain the above-mentioned silica particles, in which the content of the silica particles is less than 15% by mass and is smaller than the content of the resin contained in the composition (x).

Specifically, the content of the silica particles is less than 15% by mass, and is preferably 0 to 13% by mass, more preferably 0 to 10% by mass, even more preferably 0 to 5% by mass, still more preferably 0% by mass, relative to the total amount (100% by mass (but excluding diluent solvent)) of the composition (x).

(Composition (y))

The composition (y) is a forming material for the particle part (Y), and contains at least the above-mentioned silica particles in an amount of 15% by mass or more, but from the viewpoint of the dispersibility of the silica particles therein, the composition preferably contains a resin along with the silica particles, and more preferably further contains a crosslinking agent along with the rein. The composition (y) may contain any ordinary additive.

These resin, crosslinking agent and ordinary additive may be the forming material for the resin part (X).

The silica particles to be contained in the composition (y) from the viewpoint of forming the void part (Z) in the resin layer to provide a pressure sensitive adhesive sheet having improved blister resistance, are preferred.

The content of the silica particles in the composition (y) is, from the viewpoint of facilitating the formation of indeterminate concave portions on the surface ($\alpha$) of the resin layer through self-formation of the resin layer, 15% by mass or more, and is preferably 20 to 100% by mass, more preferably 25 to 90% by mass, even more preferably 30 to 85% by mass, still more preferably 35 to 80% by mass, relative to the total amount (100% by mass (but excluding diluent solvent)) of the resin composition (y).

The resin to be contained in the composition (y) includes the same ones as those of the resin to be contained in the above-mentioned composition (x), and preferably contains the same resin as in the composition (x). One alone or two or more of these resins may be used either singly or as combined.

More specifically, the resin to be contained in the composition (y) is preferably a resin having a functional group, more preferably the above-mentioned functional group-having acrylic resin (A), even more preferably the above-mentioned acrylic copolymer (A1).

The content of the resin in the composition (y) is generally 1 to 85% by mass, and is preferably 5 to 80% by mass, more preferably 10 to 75% by mass, even more preferably 20 to 70% by mass, further more preferably 25 to 65% by mass, relative to the total amount (100% by mass (but excluding diluent solvent)) of the composition (y).

The crosslinking agent to be contained in the composition (y) includes those of the crosslinking agent to be contained in the above-mentioned resin part (X), but preferably the composition (y) contains at least one or more selected from a metal chelate crosslinking agent, an epoxy crosslinking agent and an aziridine crosslinking agent, more preferably a metal chelate crosslinking agent. Also preferably, the composition (y) contains both a metal chelate crosslinking agent and an epoxy crosslinking agent.

In the case where the composition (y) contains both a metal chelate crosslinking agent and an epoxy crosslinking agent, a preferred range of the content ratio (by mass) of the metal chelate crosslinking agent to the epoxy crosslinking agent in the composition (y) is the same as in the above-mentioned composition (x).

The content of the crosslinking agent is preferably 0.01 to 15 parts by mass, and is more preferably 0.1 to 10 parts by mass, even more preferably 0.3 to 7.0 parts by mass, relative to 100 parts by mass of the resin contained in the composition (y).

(Formation Method for Coating Film (x'), (y'))

For facilitating the formation of a coating film, it is desirable that a solvent is incorporated in the composition (x) or (y) to give a solution of the composition.

The solvent includes water, organic solvents, etc.

Examples of the organic solvent include toluene, ethyl acetate, butyl acetate, methyl ethyl ketone, methyl isobutyl ketone, methanol, ethanol, isopropyl alcohol, t-butanol, s-butanol, acetylacetone, cyclohexanone, n-hexane, cyclohexane, etc. One alone or two or more of these solvents may be used either singly or as combined.

The order of laminating the coating films (x') and (y') to be formed in this step is not specifically limited, but preferably, the coating film (x') is laminated on the coating film (y').

Regarding the formation method for the coating films (x') and (y'), there may be employed a successive formation method of forming a coating film (y') and then forming a coating film (x') on the coating film (y'), or from the viewpoint of productivity, there may also be employed a simultaneous coating method of coating with both the coating film (y') and the coating film (x') using a multilayer coater.

Examples of the coater for use in successive formation include a spin coater, a spray coater, a bar coater, a knife coater, a roll coater, a knife roll coater, a blade coater, a gravure coater, a curtain coater, a die coater, etc.

Examples of the coater for use in simultaneous coating with a multilayer coater include a curtain coater, a die coater, etc., and among these, a die coater is preferred from the viewpoint of operability.

In this step (1), after the formation of at least one of the coating film (x') and the coating film (y') and prior to the step (2), pre-drying treatment may be carried out in such a degree that the curing reaction of the coating film could not go on.

The drying temperature in the pre-drying treatment in this step (1) is generally settled within a temperature range in which the formed coating film is not cured, but is preferably lower than the drying temperature in the step (2). A specific drying temperature indicated by the definition of indicating a range "lower than the drying temperature in the step (2)" is preferably 10 to 45°C, more preferably 10 to 34°C, even more preferably 15 to 30°C.

<Step (2)>

The step (2) is a step of drying the coating film (x') and the coating film (y') formed in the step (1) simultaneously.

In this step, the coating film (x') and the coating film (y') formed are dried simultaneously, whereby a resin layer containing the resin part (X) and the particle part (Y) is formed and in addition, plural concave portions are formed on the surface ($\alpha$) of the resin layer.

The drying temperature in this step is, from the viewpoint of facilitating the formation of plural concave portions satisfying the above-mentioned requirements (I) to (III) on the surface ($\alpha$) of the resin layer to be formed, preferably 35 to 200°C, more preferably 60 to 180°C, even more preferably 70 to 160°C, still more preferably 80 to 140°C.

When the drying temperature is 35°C or higher, a pressure sensitive adhesive sheet having good air escape property can be obtained. On the other hand, when the drying temperature is 200°C or lower, the substrate and the release material that the pressure sensitive adhesive sheet has can be free from trouble of shrinkage thereof.

When the drying temperature is lower, the height difference of the concave portions to be formed could increase but the number of the concave portions to be formed tends to decrease.

In the vicinity of the particle part (Y) of the resin layer to be formed in this step, a void part (Z) may be formed.

The void part (Z) can be readily formed by using silica particles, to be contained in the composition (y).

In the case where a pressure sensitive adhesive sheet having a resin layer having a multilayer structure is produced in which the multilayer structure is formed by laminating a layer (X$\beta$) mainly containing the resin part (X), a layer (Y1) containing the particle part (Y) in a ratio of 15% by mass or more, and a layer (X$\alpha$) mainly containing the resin part (X) in this order, like the pressure sensitive adhesive sheet 1a of Fig. 1(a), a production method of the following first and second embodiments is preferred.

In the description of the production method of the following first and second embodiments, the "composition (x$\beta$) or (x$\alpha$) containing a resin as a main component" is the same as the above-mentioned composition (x), and the details of the constituent components contained in the composition (x$\beta$) or (x$\alpha$) (kind of the component, preferred components, content of the component, etc.) are also the same as in the latter. The "composition (y) containing silica particles in an amount of 15% by mass or more" is also as mentioned above.

[Production Method of First Embodiment]

The production method of the first embodiment has at least the following steps (1A) and (2A).

Step (1A): a step of forming, on a substrate or a release material, a coating film (x$\beta$') of a composition (x$\beta$) containing a resin as a main component, a coating film (y') of a composition (y) containing silica particles in an amount of 15% by mass or more and a coating film (x$\alpha$') of a composition (x$\alpha$) containing a resin as a main component, as laminated thereon in this order

Step (2A): a step of drying the coating film (x$\beta$'), the coating film (y') and the coating film (x$\alpha$') formed in the step (1A) simultaneously

Also in the step (1A), it is desirable that the above-mentioned solvent is incorporated in the composition (x$\beta$), the composition (y) and the composition (x$\alpha$) to form solutions of the individual compositions, and the resultant solutions are used for coating.

Regarding the formation method for the coating film (x$\beta$'), the coating film (y') and the coating film (x$\alpha$'), there may be employed a successive formation method of forming a coating film (x$\beta$') on a substrate or a release material, then forming a coating film (y') on the coating film (x$\beta$'), and further forming a coating film (x$\alpha$') on the coating film (y'), using the above-mentioned coater, or a simultaneous coating method of forming a coating film (x$\beta$'), a coating film (y') and a coating film (x$\alpha$'), using the above-mentioned multilayer coater.

In the step (1A), after formation of one or more coating films of the coating film (x$\beta$'), the coating film (y') and the coating film (x$\alpha$') and prior to the step (2A), pre-drying treatment may be carried out in such a degree that the curing reaction of the coating films could not go on.

For example, after formation of the coating film (xβ'), the coating film (y') and the coating film (xα'), such pre-drying treatment may be carried out every time after the formation, or after the formation of the coating film (xβ') and the coating film (y'), the two may be subjected to the pre-drying treatment all together, and then the coating film (xα') may be formed thereon.

In this step (1A), the drying temperature for the pre-drying treatment is generally so settled as to fall within a temperature range in which the formed coating film is not cured, but is preferably lower than the drying temperature in the step (2A). A specific drying temperature indicated by the definition of indicating a range "lower than the drying temperature in the step (2A)" is preferably 10 to 45°C, more preferably 10 to 34°C, even more preferably 15 to 30°C.

The step (2A) is a step of drying the coating film (xβ'), the coating film (y') and the coating film (xα') formed in the step (1A), simultaneously. The preferred range of the drying temperature in this step is the same as that in the above-mentioned step (2). In this step, a resin layer containing the resin part (X) and the particle part (Y) is formed.

[Production Method of Second Embodiment]

The production method of the second embodiment has at least the following steps (1B) and (2B).

Step (1B): a step of forming, on a layer (Xβ) mainly containing a resin part (X) that is provided on a substrate or a release material, a coating film (y') of a composition (y) containing silica particles in an amount of 15% by mass or more and a coating film (xα') of a composition (xα) containing a resin as a main component, as laminated thereon in this order
Step (2B): a step of drying the coating film (y') and the coating film (xα') formed in the step (1B) simultaneously

In the step (1B), the "layer (Xβ) mainly containing a resin part (X)" is formed by drying the above-mentioned coating film (xβ') of a composition (xβ) containing a resin as a main component.

Since the layer (Xβ) is formed of the composition (xβ), the layer (Xβ) may contain a crosslinking agent, an ordinary additive and others in addition to the resin therein. The content of the resin part (X) in the layer (Xβ) is as described above.

Regarding the formation method for the layer (Xβ), a coating film (xβ') of a composition (xβ) containing a resin as a main component is formed on a substrate or a release material, and the coating film (xβ') is dried to form the layer.

The drying temperature at this time is not specifically limited, but is preferably 35 to 200°C, more preferably 60 to 180°C, even more preferably 70 to 160°C, still more preferably 80 to 140°C.

This embodiment differs from the above-mentioned first embodiment in that the coating film (y') and the coating film (xα') are formed in this order on the layer (Xβ) formed by drying, but not on the coating film (xβ').

Also in the step (1B), it is desirable that the above-mentioned solvent is incorporated in the composition (y) and the composition (xα) to form solutions of the respective compositions, and thereafter the solutions are used for coating.

Regarding the formation method for the coating film (y') and the coating film (xα'), there may be employed a successive formation method of forming a coating film (y') on the layer (Xβ) and then forming a coating film (xα') on the coating film (y'), using the above-mentioned coater, or a simultaneous coating method of coating with both the coating film (y') and the coating film (xα') using a multilayer coater.

In the step (1B), after formation of the coating film (y') or after formation of the coating film (y') and the coating film (xα') and prior to the step (2B), pre-drying treatment may be carried out in such a degree that the curing reaction of the coating films could not go on.

In this step (1B), the drying temperature for the pre-drying treatment is generally so settled as to fall within a temperature range in which the formed coating film is not cured, but is preferably lower than the drying temperature in the step (2B). A specific drying temperature indicated by the definition of indicating a range "lower than the drying temperature in the step (2B)" is preferably 10 to 45°C, more preferably 10 to 34°C, even more preferably 15 to 30°C.

The step (2B) is a step of drying the coating film (y') and the coating film (xα') formed in the step (1B) simultaneously, and the preferred range of the drying temperature in this step is the same as in the above-mentioned step (2). In this step, a resin layer containing the resin part (X) and the particle part (Y) is formed.

EXAMPLES

The present invention will be described more specifically with reference to the following examples, but the present invention is not limited to the following examples. The property values in the following examples and production examples are values measured by the following methods.

Mass Average Molecular Weight of Resin (Mw)

The measurement was performed by using a gel permeation chromatography instrument ("HLC-8020, a product name, produced by Tosoh Corporation) under the following conditions, and a value measured as the standard polystyrene conversion was used.

Measurement Condition

Column: "TSK guard column HXL-L", "TSK gel G2500HXL", "TSK gel G2000HXL", and "TSK gel G1000HXL" (all produced by Tosoh Corporation), connected in series
Column temperature: 40°C
Developing solvent: tetrahydrofuran
Flow rate: 1.0 mL/min

Measurement of Volume Average Secondary Particle Diameter of Silica Particles

The volume average secondary particle diameter of the silica particles was obtained by measuring the particle size distribution with Multisizer III (produced by Beckman Coulter Inc.) by the Coulter Counter method.

Measurement of Thickness of Resin Layer

The thickness of the resin layer was measured by observing the cross section of the resin layer of the target pressure sensitive adhesive sheet with a scanning electron microscope ("S-4700", a product name, produced by Hitachi, Ltd.).

Production Examples x-1 to x-6

Preparation of Solutions (x-1) to (x-6) of Resin Composition

To 100 parts by mass of the solution of an acrylic resin with the kind and the solid content shown in Table 1, a crosslinking agent and a diluting solvent with the kinds and the mixed amounts shown in Table 1 were added, so as to prepare solutions (x-1) to (x-6) of a resin composition having the solid contents shown in Table 1.
The details of the components shown in Table 1 used for the preparation of the solutions (x-1) to (x-6) of a resin composition are as follows.

Solution of Acrylic Resin

Solution (i): a mixed solution of toluene and ethyl acetate containing an acrylic resin (x-i) (an acrylic copolymer having structural units derived from butyl acrylate (BA) and acrylic acid (AA), BA/AA = 90/10 (% by mass), Mw: 470,000) having a solid concentration of 33.6% by mass
Solution (ii): a mixed solution of toluene and ethyl acetate containing an acrylic resin (x-ii) (an acrylic copolymer having structural units derived from butyl acrylate (BA), 2-ethylhexyl acrylate (2EHA), vinyl acetate (VAc), and acrylic acid (AA), BA/2EHA/VAc/AA = 46/37/10/7 (% by mass), Mw: 370,000) having a solid concentration of 43.0% by mass

Crosslinking Agent

Aluminum chelate crosslinking agent: "M-5A", a product name, produced by Soken Chemical & Engineering Co., Ltd., solid concentration: 4.95% by mass
Epoxy crosslinking agent: a solution of an epoxy crosslinking agent obtained by diluting "TETRAD-C" (a product name, produced by Mitsubishi Gas Chemical Co., Inc.) with toluene to make a solid concentration of 5% by mass
Isocyanate crosslinking agent: "Coronate L", a product name, produced by Tosoh Corporation, solid concentration: 75% by mass
Aziridine crosslinking agent: "BXX5134", a product name, produced by Toyochem Co., Ltd., solid concentration: 5% by mass

Diluting Solvent

IPA: isopropyl alcohol
AcOEt: ethyl acetate

Table 1

| Production Example | Solution of resin composition | Solution of acrylic resin | | | | Aluminum chelate crosslinking agent (M-5A, solid concentration: 4.95 wt%) | | | Epoxy crosslinking agent (TETRAD-C, solid concentration: 5 wt%) | | | Isocyanate crosslinking agent (Coronate L, solid concentration: 75 wt%) | | | Aziridine crosslinking agent (BXX5134, solid concentration: 5 wt%) | | | Diluting solvent | Solid concentration of solution of resin composition (% by mass) |
|---|---|---|---|---|---|---|---|---|---|---|---|---|---|---|---|---|---|---|---|
| | | Kind | Kind of resin | Mixed amount (part by mass) | Mixed amount of solid content (part by mass) | Mixed amount (part by mass) | Mixed amount of solid content (part by mass) | Solid content per 100 parts by mass of acrylic resin (part by mass) | Mixed amount (part by mass) | Mixed amount of solid content (part by mass) | Solid content per 100 parts by mass of acrylic resin (part by mass) | Mixed amount (part by mass) | Mixed amount of solid content (part by mass) | Solid content per 100 parts by mass of acrylic resin (part by mass) | Mixed amount (part by mass) | Mixed amount of solid content (part by mass) | Solid content per 100 parts by mass of acrylic resin (part by mass) | Kind | |
| Production Example x-1 | (x-1) | solution (i) | acrylic resin (x-i) (BA/AA = 90/10 (wt%), Mw: 470,000) | 100 | 33.6 | 5 | 0.25 | 0.74 | - | - | - | - | - | - | - | - | - | IPA | 28 |
| Production Example x-2 | (x-2) | solution (i) | acrylic resin (x-i) (BA/AA = 90/10 (wt%), Mw: 470,000) | 100 | 33.6 | - | - | - | - | - | - | - | - | - | - | - | - | IPA | 27 |
| Production Example x-3 | (x-3) | solution (ii) | Acrylic resin (x-ii) (BA/2EHA/VAc/AA = 46/37/10/7 (wt%), Mw: 370,000) | 100 | 43.0 | 4.5 | 0.22 | 0.52 | 0.3 | 0.015 | 0.035 | - | - | - | - | - | - | IPA | 34.4 |
| Production Example x-4 | (x-4) | solution (i) | acrylic resin (x-i) (BA/AA = 90/10 (wt%), Mw: 470,000) | 100 | 33.6 | - | - | - | 0.6 | 0.030 | 0.089 | - | - | - | - | - | - | IPA | 24 |
| Production Example x-5 | (x-5) | solution (i) | acrylic resin (x-i) (BA/AA = 90/10 (wt%), Mw: 470,000) | 100 | 33.6 | - | - | - | - | - | - | 1.5 | 0.56 | 1.674 | - | - | - | AcOEt | 28 |
| Production Example x-6 | (x-6) | solution (i) | acrylic resin (x-i) (BA/AA = 90/10 (wt%), Mw: 470,000) | 100 | 33.6 | - | - | - | - | - | - | - | - | - | 1.0 | 0.050 | 0.149 | AcOEt | 28 |

Production Example y-0

Preparation of Silica Particle Dispersion Liquid (y-0)

To 100 parts by mass (solid content: 33.6 parts by mass) of the solution (i) containing the acrylic resin (x-i) (a mixed solution of toluene and ethyl acetate containing an acrylic copolymer having structural units derived from butyl acrylate (BA) and acrylic acid (AA) (BA/AA= 90/10 (% by mass), Mw: 470,000) having a solid concentration of 33.6% by mass), 50.4 parts by mass (solid content: 50.4 parts by mass) of silica particles ("Nipsil E-200A", a product name, produced by Tosoh Silica Corporation, volume average secondary particle diameter: 3 $\mu$m) and toluene were added, and the silica particles were dispersed, so as to prepare a silica particle dispersion liquid (y-0) having a solid concentration of 30% by mass containing the acrylic resin and the silica particles.

Production Examples y-1 to y-8

Preparation of Coating Liquids (y-1) to (y-8) for forming Coating film (y')

To the mixed amount shown in Table 2 of the silica particle dispersion liquid (y-0) produced in Production Example y-0, the kinds and the mixed amounts shown in Table 2 of the solution of an acrylic resin, the crosslinking agent, and the diluting solvent were added, so as to prepare coating liquids (y-1) to (y-8) for forming a coating film (y') having the solid concentrations shown in Table 2.
The details of the components shown in Table 2 used for the preparation of the coating liquids (y-1) to (y-8) for forming a coating film (y') are as follows.

Solution of Acrylic Resin

Solution (i): acrylic resin (x-i) (the details thereof are described above)

Crosslinking Agent

Aluminum chelate crosslinking agent: "M-5A", a product name, produced by Soken Chemical & Engineering Co., Ltd., solid concentration: 4.95% by mass
Epoxy crosslinking agent: a solution of an epoxy crosslinking agent obtained by diluting "TETRAD-C" (a product name, produced by Mitsubishi Gas Chemical Co., Inc.) with toluene to make a solid concentration of 5% by mass

Diluting Solvent

IPA: isopropyl alcohol
IPA/CHN: mixed solvent containing isopropyl alcohol (IPA) and cyclohexanone (CHN) (IPA/CHN = 60/40 (mass ratio))

Table 2

| | Coating liquid for forming coated layer (y') | Silica particle dispersion liquid (y-0) produced in Production Example y-0 (solid concentration: 30 wt%) | | | Solution of acrylic resin | | | | Aluminum chelate crosslinking agent (M-5A, solid concentration: 4.95 wt%) | | | Epoxy crosslinking agent (TETRAD-C, solid concentration: 5 wt%) | | | Diluting solvent | Solid concentration of coating liquid (% by mass) | Concentration of silica particles in solid content of coating liquid (") (% by mass) |
|---|---|---|---|---|---|---|---|---|---|---|---|---|---|---|---|---|---|
| | | Mixed amount (part by mass) | Mixed amount of solid content (part by mass) | Content of silica particles (*) (part by mass) | Kind | Kind or resin | Mixed amount (part by mass) | Mixed amount of solid content (part by mass) | Mixed amount (part by mass) | Mixed amount of solid content (part by mass) | Solid content per 100 parts by mass of acrylic resin (part by mass) | Mixed amount (part by mass) | Mixed amount of solid content (part by mass) | Solid content per 100 parts by mass of acrylic resin (part by mass) | Kind | | |
| Production Example y-1 | (y-1) | 69.7 | 20.9 | 12.5 | solution (i) | acrylic resin (x-i) (BA/AA= 90/10 (wt%), Mw: 470,000 : | 30.3 | 10.2 | 5.52 | 0.27 | 1.47 | - | - | - | IPA | 27 | 40 |
| Production Example y-2 | (y-2) | 61.6 | 18.5 | 11.1 | solution (i) | acrylic resin (x-i) (BA/AA= 90/10 (wt%), Mw: 470,000 | 38.4 | 12.9 | 6.04 | 0.30 | 1.47 | - | - | - | IPA | 27 | 35 |
| Production Example y-3 | (y-3) | 77.6 | 23.3 | 14.0 | solution (i) | acrylic resin (x-i) (BA/AA= 90/10 (wt%), Mw: 470,000 | 22.4 | 7.5 | 5.01 | 0.25 | 1.47 | - | - | - | IPA | 27 | 45 |

EP 3 127 971 B1

| | Coating liquid for forming coated layer (y') | Silica particle dispersion liquid (y-0) produced in Production Example y-0 (solid concentration: 30 wt%) | | | Solution of acrylic resin | | | | Aluminum chelate crosslinking agent (M-5A, solid concentration: 4.95 wt%) | | | Epoxy crosslinking agent (TETRAD-C, solid concentration: 5 wt%) | | | Diluting solvent | Solid concentration of coating liquid (% by mass) | Concentration of silica particles in solid content of coating liquid (") (% by mass) |
|---|---|---|---|---|---|---|---|---|---|---|---|---|---|---|---|---|---|
| | | Mixed amount (part by mass) | Mixed amount of solid content (part by mass) | Content of silica particles (*) (part by mass) | Kind | Kind or resin | Mixed amount (part by mass) | Mixed amount of solid content (part by mass) | Mixed amount (part by mass) | Mixed amount of solid content (part by mass) | Solid content per 100 parts by mass of acrylic resin (part by mass) | Mixed amount (part by mass) | Mixed amount of solid content (part by mass) | Solid content per 100 parts by mass of acrylic resin (part by mass) | Kind | | |
| Production Example y-4 | (y-4) | 85.4 | 25.6 | 15.4 | solution (i) | acrylic resin (x-i) (BA/AA= 90/10 (wt%), Mw: 470,000 | 14.6 | 4.9 | 4.51 | 0.22 | 1.47 | - | | - | IPA | 27 | 50 |
| Production Example y-5 | (y-5) | 71.0 | 21.3 | 12.8 | solution (i) | acrylic resin (x-i) (BA/AA= 90/10 (wt%), Mw: 470,000 | 29.0 | 9.7 | 5.44 | 0.27 | 1.47 | - | - | - | IPA/ CHN | 26 | 41 |
| Production Example y-6 | (y-6) | 69.7 | 20.9 | 12.5 | solution (i) | acrylic resin (x-i) (BA/AA= 90/10 (wt%), Mw: 470,000 : | 30.3 | 10.2 | - | - | - | - | - | - | IPA | 27 | 40 |

| Coating liquid for forming coated layer (y') | | Silica particle dispersion liquid (y-0) produced in Production Example y-0 (solid concentration: 30 wt%) | | | Solution of acrylic resin | | | | Aluminum chelate crosslinking agent (M-5A, solid concentration: 4.95 wt%) | | | Epoxy crosslinking agent (TETRAD-C, solid concentration: 5 wt%) | | | Diluting solvent | Solid concentration of coating liquid (% by mass) | Concentration of silica particles in solid content of coating liquid (") (% by mass) |
|---|---|---|---|---|---|---|---|---|---|---|---|---|---|---|---|---|---|
| | | Mixed amount (part by mass) | Mixed amount of solid content (part by mass) | Content of silica particles (*) (part by mass) | Kind | Kind or resin | Mixed amount (part by mass) | Mixed amount of solid content (part by mass) | Mixed amount (part by mass) | Mixed amount of solid content (part by mass) | Solid content per 100 parts by mass of acrylic resin (part by mass) | Mixed amount (part by mass) | Mixed amount of solid content (part by mass) | Solid content per 100 parts by mass of acrylic resin (part by mass) | Kind | | |
| Production Example y-7 | (y-7) | 71.0 | 21.3 | 12.8 | solution (i) | acrylic resin (x-i) (BA/AA= 90/10 (wt%), Mw: 470,000 | 29.0 | 9.7 | - | - | - | 0.66 | 0.033 | 0.18 | IPA | 26 | 41 |
| Production Example y-8 | (y-8) | 71.0 | 21.3 | 12.8 | solution (i) | acrylic resin (x-i) (BA/AA= 90/10 (wt%), Mw: 470,000 | 29.0 | 9.7 | 2.72 | 0.13 | 0.74 | 0.33 | 0.017 | 0.09 | IPA | 26 | 41 |

(*): value calculated from (solid mixed amount) $\times$ 50.4 / (50.4+33.6)

(**): value calculated from (content of silica particles)/((solid mixed amount in silica particle dispersion liquid (y-0))+solid mixed amount of acrylic resin)+(solid mixed amount of aluminum chelate crosslinking agent)+(solid mixed amount of epoxy crosslinking agent)) $\times$ 100

Examples 1 to 8

(1) Formation of Coating film

A polyethylene terephthalate (PET) film having an aluminum vapor deposition layer on one surface thereof ("FNS MAT N50", a product name, produced by Lintec Corporation, thickness: 50 $\mu$m) was used as a substrate.

On the aluminum vapor deposition layer of the PET film, the solution (x-1) of a resin composition prepared in Production Example x-1 was coated with an applicator to the thickness shown in Table 3 as the thickness of the coating film after coating (i.e., the thickness of the coating film in a non-dried state), so as to form a coating film (x$\beta$').

Subsequently, on the coating film (x$\beta$') thus formed, one of the coating liquids (y-1) to (y-4) for forming a coating film (y') of the kinds shown in Table 3 was coated with an applicator to the thickness shown in Table 3 as the total thickness after coating both the two layers, i.e., the coating film (x$\beta$') and a coating film (y') (i.e., the total thickness of the two layers in a non-dried state), so as to form a coating film (y').

Then, on the coating film (y') thus formed, the solution (x-1) of a resin composition prepared in Production Example x-1 was coated with an applicator to the thickness shown in Table 3 as the total thickness after coating all the three layers, i.e., the coating film (x$\beta$'), the coating film (y'), and a coating film (x$\alpha$') (i.e., the total thickness of the three layers in a non-dried state), so as to form a coating film (x$\alpha$').

(2) Drying Treatment

The three layers of the coating film (x$\beta$'), the coating film (y'), and the coating film (x$\alpha$') were simultaneously dried at a drying temperature of 100°C for 2 minutes, thereby producing a pressure sensitive adhesive sheet with a substrate, having a resin layer containing a resin part (X) and a particle part (Y) having the thickness shown in Table 3.

Example 9

A PET film having an aluminum vapor deposition layer on one surface thereof ("FNS MAT N50", a product name, produced by Lintec Corporation, thickness: 50 $\mu$m) was used as a substrate.

On the aluminum vapor deposition layer of the PET film, the solution (x-2) of a resin composition prepared in Production Example x-2 was coated with a knife coater to a thickness of 25 $\mu$m as the thickness of the coating film after coating (i.e., the thickness of the coating film in a non-dried state), so as to form a coating film (x$\beta$'), which was then dried at a drying temperature of 100°C for 2 minutes, so as to form a layer (X$\beta$) containing a resin part (X).

Lamination was performed in such a manner that the surface of the layer (X$\beta$) thus formed was attached to a release agent layer of a release film ("SP-PET381031", a product name, produced by Lintec Corporation, a PET film having a silicone release agent layer provided on one surface thereof, thickness: 38 $\mu$m), so as to produce once a laminated body having the layer (X$\beta$).

Subsequently, on the surface of the layer (X$\beta$) having been exposed by removing the release film of the laminated body, the coating liquid (y-1) for forming a coating film (y') prepared in Production Example y-1 and the solution (x-1) of a resin composition prepared in Production Example x-1 were simultaneously coated with a multilayer die coater (width: 500 mm), so as to form a coating film (y') and a coating film (x$\alpha$') simultaneously in this order on the layer (X$\beta$). The coated layers were formed to a thickness of 55 $\mu$m for the coating film (y') and a thickness of 65 $\mu$m for the coating film (x$\alpha$') through the setting of the multilayer die coater.

Then, the two layers of the coating film (y') and the coating film (x$\alpha$') were simultaneously dried at a drying temperature of 100°C for 2 minutes, thereby producing a pressure sensitive adhesive sheet with a substrate, having a resin layer containing a resin part (X) and a particle part (Y) having the thickness shown in Table 3.

Comparative Example 1

A pressure sensitive adhesive sheet with a substrate, having a resin layer containing only a resin part (X) having a thickness of 25 $\mu$m was produced in the same manner as in Example 1, except that the coating film (y') and the coating film (x$\alpha$') in Example 1 were not formed, but on the aluminum vapor deposition layer of the PET film used as the substrate, the solution (x-1) of a resin composition prepared in Production Example x-1 was coated with a knife coater to a thickness of 25 $\mu$m after drying to form a coating film (x$\beta$').

Comparative Example 2

A PET film having an aluminum vapor deposition layer on one surface thereof ("FNS MAT N50", a product name, produced by Lintec Corporation, thickness: 50 $\mu$m) was used as a substrate.

On the aluminum vapor deposition layer of the PET film, the solution (x-1) of a resin composition prepared in Production Example x-1 was coated with an applicator to form a coating film (xβ'), which was then dried at 100°C for 2 minutes, so as to form a layer (Xβ) containing a resin part (X) having a thickness of 5 μm.

Separately from the above, on a release agent layer of a release film ("SP-PET381031", a product name, produced by Lintec Corporation, a PET film having a silicone release agent layer provided on one surface thereof, thickness: 38 μm), the coating liquid (y-1) for forming a coating film (y') prepared in Production Example y-1 was coated with an applicator to form a coated layer (y'), which was then dried at 100°C for 2 minutes, so as to form a layer (Y1) containing a resin part (X) and a particle part (Y) having a thickness of 15 μm.

Further separately from the above, on a release agent layer of a release film of the same kind as above, the solution (x-1) of a resin composition prepared in Production Example x-1 was coated with an applicator to form a coating film (xα'), which was then dried at 100°C for 2 minutes, so as to form a layer (Xα) containing a resin part (X) having a thickness of 5 μm.

Then, lamination was performed in such a manner that the surface of the layer (Xβ) formed on the PET film as the substrate was attached to the exposed surface of the layer (Y1) thus formed. Furthermore, lamination was performed in such a manner that the surface of the layer (Y1) having been exposed by removing the release film on the layer (Y1) was attached to the exposed surface of the layer (Xα) thus formed.

According to the procedures, a pressure sensitive adhesive sheet with a substrate, having a resin layer containing a resin part (X) and a particle part (Y) having a thickness of 25 μm, containing the substrate having laminated in this order thereon the layer (Xβ), the layer (Y1), and the layer (Xα) was produced.

Examples 10 to 16

A PET film having an aluminum vapor deposition layer on one surface thereof ("FNS MAT N50", a product name, produced by Lintec Corporation, thickness: 50 μm) was used as a substrate.

On the aluminum vapor deposition layer of the PET film, one of the solutions (x-1) to (x-6) of a resin composition prepared in Production Examples x-1 to x-6 and one of the coating liquids (y-1) to (y-8) for forming a coating film (y') prepared in Production Examples y-1 to y-8 were simultaneously coated with a multilayer die coater (width: 250 mm) at the flow rate and the coating speed shown in Table 4, so as to form a coating film (xβ'), a coating film (y'), and a coating film (xα') simultaneously in this order from the side of the substrate.

The kind of the solution of the resin composition and the kind of the coating liquid for forming a coated layer (y') used as formation materials of the coating films are shown in Table 4.

The three layers of the coating film (xβ'), the coating film (y'), and the coating film (xα') were simultaneously dried at a drying temperature of 100°C for 2 minutes, thereby producing a pressure sensitive adhesive sheet with a substrate, having a resin layer containing a resin part (X) and a particle part (Y) having the thickness shown in Table 4.

Example 17

On a release agent layer of a release film ("SP-PET381031", a product name, produced by Lintec Corporation, a PET film having a silicone release agent layer provided on one surface thereof, thickness: 38 μm) as a first release material, the solution (x-3) of a resin composition prepared in Production Example x-3, the coating liquid (y-5) for forming a coating film (y') prepared in Production Example y-5, and the solution (x-3) of a resin composition prepared in Production Example x-3 were simultaneously coated in this order with a multilayer die coater (width: 250 mm) at the flow rate and the coating speed shown in Table 4, so as to form a coating film (xβ'), a coating film (y'), and a coating film (xα') simultaneously in this order from the side of the release film.

Then, the three layers of the coating film (xβ'), the coating film (y'), and the coating film (xα') were simultaneously dried at a drying temperature of 100°C for 2 minutes, so as to form a resin layer containing a resin part (X) and a particle part (Y) having the thickness shown in Table 4. Then, lamination was performed in such a manner that the surface (α) of the resin layer thus formed was attached to a surface of a release agent layer of a release film ("SP-PET386040", a product name, produced by Lintec Corporation) as a second release material, thereby producing a pressure sensitive adhesive sheet without a substrate.

Subsequently, after allowing to stand the pressure sensitive adhesive sheet without a substrate under an environment at 23°C for one week, the first release material was removed, and lamination was performed in such a manner that the exposed surface (β) of the resin layer was attached to a surface of an aluminum vapor deposition layer of a PET film having an aluminum vapor deposition layer ("FNS MAT N50", a product name, produced by Lintec Corporation, thickness: 50 μm) as a substrate, thereby providing a pressure sensitive adhesive sheet with a substrate.

Example 18

A PET film having an aluminum vapor deposition layer on one surface thereof ("FNS MAT N50", a product name, produced by Lintec Corporation, thickness: 50 $\mu$m) was used as a substrate.

On the aluminum vapor deposition layer of the PET film, the solution (x-1) of a resin composition prepared in Production Example x-1 was coated with a knife coater to form a coating film (x$\beta$'), which was then dried at 100°C for 2 minutes, so as to form a layer (X$\beta$) containing a resin part (X) having a thickness of 8 $\mu$m. Lamination was performed in such a manner that the surface of the layer (X$\beta$) thus formed was attached to a surface of a release agent layer of a release film ("SP-PET381031", a product name, produced by Lintec Corporation, a PET film having a silicone release agent layer provided on one surface thereof, thickness: 38 $\mu$m), so as to produce once a laminated body having the layer (X$\beta$).

Subsequently, on the surface of the layer (X$\beta$) having been exposed by removing the release film of the laminated body, the coating liquid (y-1) for forming a coating film (y') prepared in Production Example y-1 and the solution (x-1) of a resin composition prepared in Production Example x-1 were simultaneously coated in this order with a multilayer die coater (width: 500 mm) at the flow rate and the coating speed shown in Table 4, so as to form a coating film (y') and a coating film (x$\alpha$') simultaneously in this order from the side of the layer (X$\beta$).

Then, the two layers of the coating film (y') and the coating film (x$\alpha$') were simultaneously dried at a drying temperature of 100°C for 2 minutes, thereby producing a pressure sensitive adhesive sheet with a substrate, having a resin layer containing a resin part (X) and a particle part (Y) having the thickness shown in Table 4.

The resin layers of the pressure sensitive adhesive sheets produced in Examples and Comparative Examples were subjected to the measurements and the evaluations shown below. The results are shown in Tables 3 and 4.

<Formation of one or more Concave portions on Surface ($\alpha$)>

A specific region defined by the requirements on the surface ($\alpha$) of the resin layer of the pressure sensitive adhesive sheet produced in Examples and Comparative Examples was checked for formation of one or more concave portions satisfying the following requirements (I) to (II), using a scanning electron microscope (trade name "S-4700", manufactured by Hitachi Limited, for the requirement (II), the magnification for observation was 30).

In Table 3 and Table 4, those judged to have one or more concave portions satisfying the requirements formed therein were given "A", and those not judged to have one or more concave portions satisfying the requirements were given "F".

Requirement (I): Plural concave portions having a maximum height difference of 0.5 $\mu$m or more exist in a region (P) surrounded by a square having an edge length of 5 mm that is arbitrarily selected on the surface ($\alpha$).

Requirement (II): Relative to the total number (100%) of plural concave portions having a maximum height difference of 0.5 $\mu$m or more existing inside a region (P) surrounded by a square having an edge length of 5 mm that is arbitrarily selected on the surface ($\alpha$), the number of the concave portions that have shapes differing from each other is 95% or more (in the case of 100%, that is, in the case where all the concave portions inside the region (P) have shapes differing from each other, the tested sheets were given "A+" in the Tables.)

In evaluation of the requirement (I), a largest value of the measured plural height differences of the concave portions is referred to as "maximum height difference" as shown in Table 3 and Table 4.

Area Ratio of Attached area

As the "light transmissive adherend having a smooth surface", alkali-free glass ("Eagle XG", a product name, produced by Corning, Inc.) was used.

10 values calculated through the following operational steps (i) to (iii) were obtained, and the average value of the 10 values was assumed to be the "area ratio of the attached area on the surface ($\alpha$)" of the target pressure sensitive adhesive sheet. The measurement results of Examples and Comparative Examples are shown in Tables 3 and 4.

Operational step (i): As shown in Fig. 4(a), on the smooth surface 101a of the light transmissive adherend 101, the pressure sensitive adhesive sheets produced in Examples and Comparative Examples were placed in such a manner that the surface ($\alpha$) 12a of the resin layer 12 of the pressure sensitive adhesive sheet was in contact with the smooth surface 101a. The pressure sensitive adhesive sheet was pressed from the side of the substrate 11 thereof with a 2 kg roller (press application device defined in JIS Z0237:2000, 10.2.4) by five reciprocations, so as to attach the surface ($\alpha$) 12a of the resin layer 12 to the smooth surface 101a of the light transmissive adherend 101. Thus, a laminated body 100 disposed in the direction shown in Fig. 4(a) was obtained.

Operational step (ii): A region (Q) surrounded by a square having an edge length of 1 mm that was arbitrarily selected on the surface ($\alpha$) 12a was photographed from the side of the light transmissive adherend 101 of the laminated body 100 obtained in the operational step (i) with a digital microscope ("Digital Microscope VHX-1000", a product name, produced by Keyence Corporation) for the interface between the smooth surface 101a of the light transmissive adherend 101 and the surface ($\alpha$) 12a of the resin layer from the direction W in Fig. 4(a), so as to provide a digital image of the selected region (Q). 10 of the regions (Q) were selected, and 10 kinds of the digital images were obtained.

Operational step (iii): The resulting digital image was subjected to an image processing (binary processing) with an image analysis software ("Image-Pro Plus", a product name, produced by Media Cybernetics, Inc.) to provide a binary image. The area S of the attached area attached to the smooth surface of the light transmissive adherend in the total area of the selected region (Q) was obtained based on the binary image, and the area ratio of the attached area to the light transmissive adherend in the selected region (Q) was calculated according to the calculation expression, (area ratio of attached area (%)) = (S/(total area of selected region)) × 100.

The 10 kinds of the digital images were subjected to the same operation, and the average values of the resulting values of the "area ratio of the attached area" are shown in Tables 3 and 4.

Shape of Attached area

For the pressure sensitive adhesive sheets produced in Examples and Comparative Examples, the laminated body 100 produced in the "operational step (i)" in the measurement of the area ratio of the attached area was visible to the naked eyes from the side of the light transmissive adherend 101 in the direction W in Fig. 4(a) for the state of the surface ($\alpha$) of the resin layer of each of the pressure sensitive adhesive sheets. The shape of the attached area to the smooth surface of the light transmissive adherend on the surface ($\alpha$) was evaluated based on the following standard.

A: The shape of the attached area to the smooth surface of the light transmissive adherend on the surface ($\alpha$) was visually confirmed, and the shape of the attached area was determined to be an irregular shape.
B: The shape of the attached area to the smooth surface of the light transmissive adherend on the surface ($\alpha$) was visually confirmed, but the shape of the attached area was not to be an irregular shape.
C: The shape of the attached area to the smooth surface of the light transmissive adherend on the surface ($\alpha$) was not visually confirmed.

Mass Retention Rate of Resin Layer of Pressure Sensitive Adhesive Sheet

For Examples and Comparative Examples except for Example 17, the resin layer was formed according to the method of the Examples and Comparative Examples on the surface of the release agent layer of a release film ("SP-PET381031", a product name, produced by Lintec Corporation, a PET film having a silicone release agent layer provided on one surface thereof, thickness: 38 $\mu$m) instead of the substrate, and then the release film was removed, so as to provide a sole resin layer.

For Example 17, the two release films were removed from the pressure sensitive adhesive sheet without a substrate obtained in the course of the production, so as to provide a sole resin layer.

The resin layer before heating was measured for the mass thereof, and then heated to 800°C for 30 minutes in a muffle furnace ("KDF-P90", a product name, produced by Denken Co., Ltd.). The resin layer after heating was measured for the mass thereof, and the mass retention rate of the resin layer was calculated by the following expression.

$$\text{mass retention rate of resin layer (\%)} = ((\text{mass of resin layer after heating})/(\text{mass of resin layer before heating})) \times 100$$

The pressure sensitive adhesive sheets produced in Examples and Comparative Examples were measured or evaluated for the "air escape property", the "blister resistance", and the "adhesive strength" according to the following methods. The results are shown in Tables 3 and 4.

Air Escape Property

The pressure sensitive adhesive sheet with a substrate in a size of 50 mm in length and 50 mm in width was attached to a melamine-coated plate as an adherend in a manner forming air accumulation. The presence of absence of the air accumulation after press-attaching with a squeegee was observed, and the air escape property of the pressure sensitive adhesive sheets was evaluated based on the following standard.

A: The air accumulation disappeared, and excellent air escape property was obtained.
F: The air accumulation remained, and poor air escape property was obtained.

Blister Resistance

The pressure sensitive adhesive sheet with a substrate in a size of 50 mm in length and 50 mm in width was attached to a polymethyl methacrylate plate having a size of 70 mm in length, 150 mm in width, and 2 mm in thickness ("Acrylite L001", produced by Mitsubishi Rayon Co., Ltd.), followed by press-attaching with a squeegee, so as to provide a test specimen.

The test specimen was allowed to stand at 23°C for 12 hours, then allowed to stand in a hot air dryer at 80°C for 1.5 hours, further allowed to stand in a hot air dryer at 90°C for 1.5 hours, and then visible to the naked eyes for the occurrence state of blister after the heat acceleration, and the blister resistance of the pressure sensitive adhesive sheets was evaluated based on the following standard.

A: Completely no blister was observed.
B: Blister was partially observed.
C: Blister was observed over the surface.

Adhesive Strength

The pressure sensitive adhesive sheets with a substrate produced in Examples and Comparative Examples were cut into a size of 25 mm in length and 300 mm in width, and the surface ($\alpha$) of the resin layer of the pressure sensitive adhesive sheets was attached to a stainless steel plate (SUS304, polished with #360 polishing paper) under an environment of 23°C, 50%RH (relative humidity), followed by allowing to stand in the same environment for 24 hours. After standing, the adhesive strength of the pressure sensitive adhesive sheets was measured according to JIS Z0237:2000 by the 180° peeling method at a peeling speed of 300 mm/min.

Table 3

| | Thickness of coating film (μm) | | | Coating film (xβ') | Coating film (y') | | Coating film (xα') | | Resin layer | | | | | | | Pressure sensitive adhesive sheet evaluation Items | | |
|---|---|---|---|---|---|---|---|---|---|---|---|---|---|---|---|---|---|---|
| | Coating film (xβ') | Coating film (xβ'+y') | Coating film (xβ'+y' + Xα') | Kind of solution | Kind of coating liquid | Particle concentration in coating film (y') (% by mass) | Kind of solution | Thickness (μm) | Shapes of one or more concave portions on surface (α) | | | Areal ratio of attached area (%) | Shape of attached area | Mass retention rate of resin layer (% by mass) | | Air escape property | Blister resistance | Adhesive strength (N/25 mm) |
| | | | | | | | | | Requirement (I) | Requirement (II) | Maximum height Difference (μm) | | | | | | |
| Example 1 | 25 | 75 | 100 | (x-1) | (y-1) | 40 | (x-1) | 25.7 | A | A+ | 15.7 | 59.9 | A | 16.9 | | A | A | 8.6 |
| Example 2 | 12.5 | 75 | 100 | (x-1) | (y-1) | 40 | (x-1) | 25.1 | A | A+ | 17.3 | 54.3 | A | 20.0 | | A | A | 12.7 |
| Example 3 | 25 | 50 | 100 | (x-1) | (y-1) | 40 | (x-1) | 23.9 | A | A+ | 7.6 | 61.6 | A | 9.5 | | A | A | 11.7 |
| Example 4 | 25 | 200 | 250 | (x-1) | (y-1) | 40 | (x-1) | 43.1 | A | A+ | 42.4 | 41.8 | A | 28.1 | | A | A | 7.8 |
| Example 5 | 25 | 75 | 100 | (x-1) | (y-2) | 35 | (x-1) | 23.8 | A | A+ | 6.6 | 71.7 | A | 15.0 | | A | A | 9.4 |
| Example 6 | 25 | 75 | 100 | (x-1) | (y-3) | 45 | (x-1) | 30.1 | A | A+ | 26.3 | 55.2 | A | 20.9 | | A | A | 10.1 |
| Example 7 | 25 | 75 | 100 | (x-1) | (y-4) | 50 | (x-1) | 32.3 | A | A+ | 30.8 | 54.3 | A | 23.1 | | A | A | 10.8 |
| Example 8 | 25 | 200 | 250 | (x-1) | (y-2) | 35 | (x-1) | 41.0 | A | A+ | 3.5 | 89.8 | A | 21.3 | | A | A | 12.4 |
| Example 9 | 25 | 80(*1) | 145(*1) | (x-2) | (y-1) | 40 | (x-1) | 42.0 | A | A+ | 18.5 | 47.7 | A | 15.1 | | A | A | 10.2 |
| Comparative Example 1 | 25(*2) | - | - | (x-1) | - | 0 | - | 25.0 | F | -(*3) | 0 | 100.0 | C | 0.0 | | F | C | 18.0 |
| Comparative Example 2 | 5(*2) | 20(*2) | 25(*2) | (x-1) | (y-1) | 40 | (x-1) | 25.0 | F | -(*3) | 0 | 100.0 | C | 17.0 | | F | A | 15.0 |

(*1): This is not a measured value but is a thickness of the coating film settled in a multilayer die coater.
(*2) This is a thickness of the coating film after dried.
(*3): Concave portions were not formed on the surface (α), and the sample was not evaluated.

Table 4

| | Coating speed (m/min) | Flow rate of solution (Coating liquid) (g/min) | | | Coating film (xβ') | Coating film (y') | | Coating film (xα') | Resin layer | | | | | | | Pressure sensitive adhesive sheet evaluation items | | |
|---|---|---|---|---|---|---|---|---|---|---|---|---|---|---|---|---|---|---|
| | | Coating film (xβ') | Coating film (y') | Coating film (xα') | Kind of solution | Kind of coating liquid | Particle concentration in coating film (y') (% by mass) | Kind of solution | Thickness (μm) | Shapes of one or more concave portions on surface (α) | | | Areal ratio of attached area (%) | Shape of attached area | Mass retention rate of resin layer (% by mass) | Air escape property | Blister resistance | Adhesive strength (N/25 mm) |
| | | | | | | | | | | Requirement (I) | Requirement (II) | Maximum Height Difference (μm) | | | | | | |
| Example 10 | 3.0 | 27 | 27 | 27 | (x-1) | (y-1) | 40 | (x-1) | 30.0 | A | A+ | 20.3 | 36.9 | A | 8.6 | A | A | 8.8 |
| Example 11 | 3.0 | 27 | 21 | 27 | (x-1) | (y-1) | 40 | (x-1) | 26.7 | A | A+ | 15.0 | 40.2 | A | 7.1 | A | A | 10.8 |
| Example 12 | 3.0 | 27 | 9 | 27 | (x-1) | (y-1) | 40 | (x-1) | 23.3 | A | A+ | 10.6 | 67.7 | A | 5.8 | A | A | 13.3 |
| Example 13 | 3.0 | 27 | 51 | 54 | (x-3) | (y-5) | 41 | (x-3) | 51.0 | A | A+ | 42.5 | 59.2 | A | 12.6 | A | A | 23.5 |
| Example 14 | 3.0 | 27 | 27 | 27 | (x-4) | (y-6) | 40 | (x-4) | 29.6 | A | A+ | 19.5 | 45.2 | A | 8.4 | A | A | 10.3 |
| Example 15 | 3.0 | 27 | 27 | 27 | (x-4) | (y-7) | 40 | (x-4) | 29.2 | A | A+ | 19.2 | 48.0 | A | 8.2 | A | A | 11.6 |
| Example 16 | 3.0 | 27 | 27 | 27 | (x-5) | (y-8) | 40 | (x-6) | 29.5 | A | A+ | 17.7 | 40.2 | A | 8.0 | A | A | 9.8 |
| Example 17 | 3.0 | 27 | 51 | 54 | (x-3) | (y-5) | 41 | (x-3) | 51.0 | A | A+ | 41.0 | 60.0 | A | 12.6 | A | A | 24.0 |
| Example 18 | 5.0 | (8 μm) (*4) | 133 | 161 | (x-1) | (y-1) | 40 | (x-1) | 42.0 | A | A+ | 18.5 | 47.7 | A | 15.1 | A | A | 10.2 |

(*4): This is a thickness of the coating film (xβ') after dried.

From Table 3 and Table 4, it is confirmed that the pressure sensitive adhesive sheets produce in Examples 1 to 18 all had plural concave portions satisfying the above-mentioned requirements (I) and (II) on the surface (α) and that the areal ratio of the attached area in the surface (α) falls within the above-mentioned range, and accordingly, these adhesive sheets all had good air escape property, blister resistance and adhesive strength. In any of these pressure sensitive adhesive sheets, the concave portions existing on the surface (α) were visually confirmed.

In addition, in all the pressure sensitive adhesive sheets produced in Examples 1 to 18, it is confirmed that plural concave portions existed irregularly on the surface (α). This is known also from Fig. 5 and Fig. 6.

For measurement of the areal ratio of the attached area in the surface (α) in the pressure sensitive adhesive sheets produced in Examples 1 to 15, as in Fig. 4(a), the surface (α) 12a was attached to the smooth surface 100a of the light transmissive adherend 100, and then the surface (α) was visible to the naked eyes from the direction W on the side of the light transmissive adherend 100. As a result, in all the pressure sensitive adhesive sheets produced in Examples 1 to 15, presence of concave portions on the surface (α) was confirmed and in addition, unique shapes of the attached areas were also confirmed.

Fig. 5 and Fig. 6 each include images of the pressure sensitive adhesive sheet produced in Example 1 and Example 10, respectively, taken through a scanning electron microscope; and (a) is an image of a cross section of the pressure sensitive adhesive sheet, and (b) is a perspective image of the surface (α) of the resin layer of the pressure sensitive adhesive sheet. In the image of Fig. 5(a), 10 scale marks given at the bottom right of the image indicate a length of 20.0 μm, and in the image of Fig. 5(b), 10 scale marks given at the bottom right of the image indicate a length of 1.00 mm. In the image of Fig. 6(a), 10 scale marks given at the bottom right of the image indicate a length of 200 μm, and in the image of Fig. 6(b), 10 scale marks given at the bottom right of the image indicate a length of 1.00 mm.

From the images of Fig. 5 and Fig. 6, it is known that plural concave portions exist irregularly on the surface (α) of the resin layer of the pressure sensitive adhesive sheet produced in Examples 1 and 10.

The images of Fig. 5 and Fig. 6 show the shapes of the one or more concave portions existing on the surface (α) of the resin layer of the pressure sensitive adhesive sheet produced in Examples 1 and 10. The cross-sectional profiles of the one or more concave portions of the pressure sensitive adhesive sheets of other Examples and the shapes of the concave portions observed from the side of the surface (α) of the resin layer thereof as well as the shapes of he attached areas of the pressure sensitive adhesive sheets were all the same as in the images shown in Fig. 5 and Fig. 6.

On the other hand, formation of any specific concave portions could not be recognized on the surface of the resin layer that the pressure sensitive adhesive sheet produced in Comparative Examples 1 and 2 has, and the air escape property of these adhesive sheets was poor. In addition, the pressure sensitive adhesive sheet of Comparative Example 1 was also poor in blister resistance.

Fig. 7 includes images of the pressure sensitive adhesive sheet produced in Comparative Example 1, taken through a scanning electron microscope; and (a) is an image of a cross section of the pressure sensitive adhesive sheet, and (b) is a perspective image of the surface (α) of the resin layer of the pressure sensitive adhesive sheet. In the image of Fig. 7(a), 10 scale marks given at the bottom right of the image indicate a length of 20.0 μm, and in the image of Fig. 7(b), 10 scale marks given at the bottom right of the image indicate a length of 1.00 mm.

As shown in Fig. 7, formation of concave portions was not seen on the surface (α) of the resin layer of the pressure sensitive adhesive sheet produced in Comparative Example 1.

Figs. 8, 9 and 10 each are a binarized image obtained by image processing (image binarization), for which the surface (α) of the resin layer of the pressure sensitive adhesive sheet produced in any of Example 1, Example 10 and Comparative Example 1, respectively, is attached to a smooth surface of a light transmissive adherend having a smooth surface, the surface (α) is observed from the side of the light transmissive adherend to take a digital image thereof, and a region surrounded by an arbitrarily selected square having an edge length of 2 mm on the digital image is image-processed (image-binarized).

The operations to take the binarized image are the same as the operations (i) to (iii) for the item "areal ratio of the attached area".

In the images of Figs. 8 to 10, the outer frame shows a square having an edge length of 2 mm. In the binarized images of Fig. 8 to Fig. 10, the white portions indicate the attached areas and the black portions indicate non-attached areas.

In the pressure sensitive adhesive sheet of Comparative Example 10, any concave portions were not formed on the surface (α) of the resin layer, and accordingly, the whole area of the surface (α) is an attached area, therefore presenting the binarized image of Fig. 10.

INDUSTRIAL APPLICABILITY

One embodiment of the pressure sensitive adhesive sheet of the present invention is useful as a pressure sensitive adhesive sheet having a large adhesive area that is used for identification or decoration, for masking in coating, and for surface protection for metal plates, etc.

REFERENCE SIGN LIST

| | |
|---|---|
| 1a, 1b, 2a, 2b | Pressure sensitive Adhesive Sheet |
| 11 | Substrate |
| 12 | Resin Layer |
| 12a | Surface (α) |
| 12b | Surface (β) |
| (X) | Resin Part (X) |
| (Y) | Particle Part (Y) |
| (Xβ) | Layer (Xβ) mainly containing the resin part (X) |
| (Xα) | Layer (Xα) mainly containing the resin part (X) |
| (Y1) | Layer (Y1) containing the particle part (Y) in a ratio of 15% by mass or more |
| 13, 131, 132 | Concave portions |
| 14, 14a | Release Material |
| 50 | Square having an edge length of 1 mm |
| 100 | Laminate |
| 101 | Light transmissive Adhesive |
| 101a | Smooth Surface |
| 121 | Attached area |
| 122 | Non-Attached area |

**Claims**

1. A pressure sensitive adhesive sheet comprising, on a substrate or a release material, a resin layer that includes a resin part (X) containing a resin as a main component, and a particle part (Y) consisting of silica particles, wherein the volume-average secondary particle diameter of the silica particles determined by measuring the particle size distribution according to a Coulter counter method is 0.5 to 10 $\mu$m, and wherein the resin layer contains a multi-layer structure containing a layer (Xβ) mainly containing the resin part (X), a layer (Y1) containing the particle part (Y) in an amount of 15% by mass or more, and a layer (Xα) mainly containing the resin part (X), as laminated in this order from the side on which the substrate or the release material is provided, at least a surface (α) of the resin layer being opposite to the side thereof on which the substrate or the release material is provided having pressure sensitive adhesiveness, wherein plural concave portions having a maximum height difference of 0.5 $\mu$m or more exist in a region (P) surrounded by a square having an edge length of 5 mm that is arbitrarily selected on the surface ($\alpha$), and 95% or more of the plural concave portions existing inside the region (P) have shapes differing from each other, and

when the surface ($\alpha$) of the resin layer is attached to a smooth surface of a light transmissive adherend having a smooth surface, which means a surface whose centerline mean roughness ($Ra_{75}$) defined in JIS B0601:2001 is 0.1 $\mu$m or less, and a characteristic of having a total light transmittance of 70% or more as measured according to JIS K7105, the areal ratio of the attached area against the smooth surface of the light transmissive adherend to the surface ($\alpha$) is 10 to 95%, determined by the method described in the description of the present invention as filed.

2. The pressure sensitive adhesive sheet according to claim 1, wherein the plural concave portions exist irregularly on the surface ($\alpha$).

3. The pressure sensitive adhesive sheet according to claim 1 or 2, wherein the shape of the attached area as defined in claim 1 has an irregular shape.

4. The pressure sensitive adhesive sheet according to any one of claims 1 to 3, wherein the resin contained in the resin part (X) contains a pressure sensitive adhesive resin.

5. The pressure sensitive adhesive sheet according to any one of claims 1 to 4, wherein the resin contained in the resin part (X) contains an acrylic resin having a functional group.

6. The pressure sensitive adhesive sheet according to any one of claims 1 to 5, wherein the surface ($\beta$) of the resin layer on the side on which the substrate or the release material is provided has pressure sensitive adhesiveness.

7. The pressure sensitive adhesive sheet according to claim 6, which has the resin layer on the release material.

8. The pressure sensitive adhesive sheet according to any one of claims 1 to 7, wherein the content (% by mass) of the silica particles contained in the resin layer is 3 to 90% by mass, and the content (% by mass) of the silica particles contained in the resin layer was calculated by the following expression:

content (% by mass) of the silica particles contained in the resin layer = ((mass of resin layer after heating at 800°C for 30 minutes)/(mass of resin layer before heating)) $\times$ 100.

9. The pressure sensitive adhesive sheet according to any one of claims 1 to 8, wherein:

the layer (X$\beta$) is a layer formed by a composition (x$\beta$) containing the resin as a main component,
the layer (Y1) is a layer formed by a composition (y) containing the silica particles in an amount of 15% by mass or more, and
the layer (X$\alpha$) is a layer formed by a composition (x$\alpha$) containing the resin as a main component.

10. A method for producing a pressure sensitive adhesive sheet according to claim 9, which comprises at least the following steps (1A) and (2A):

step (1A): a step of forming, on a substrate or a release material, a coating film (x$\beta$') formed by the composition (x$\beta$) containing the resin as a main component, a coating film (y') formed by the composition (y) containing the silica particles in an amount of 15% by mass or more and a coating film (x$\alpha$') formed by the composition (x$\alpha$) containing the resin as a main component, by laminating in this order; and
step (2A): a step of drying the coating film (x$\beta$'), the coating film (y') and the coating film (x$\alpha$') formed in the step (1A), simultaneously.

11. A method for producing a pressure sensitive adhesive sheet according to claim 9, which comprises at least the following steps (1B) and (2B):

step (1B): a step of forming, on the layer (X$\beta$) mainly containing a resin part (X) that is provided on a substrate or a release material, a coating film (y') formed by the composition (y) containing silica particles in an amount of 15% by mass or more and a coating film (x$\alpha$') formed by the composition (x$\alpha$) containing the resin as a main component, by laminating in this order; and
step (2B): a step of drying the coating film (y') and the coating film (x$\alpha$') formed in the step (1B) simultaneously.

**Patentansprüche**

1. Eine Haftklebefolie, die auf einem Substrat oder einem Trennmaterial eine Harzschicht umfasst, die einen Harzteil (X), der ein Harz als Hauptkomponente enthält, und einen Partikelteil (Y), der aus Siliciumdioxidpartikeln besteht, einschließt, wobei der volumengemittelte sekundäre Partikeldurchmesser der Siliciumdioxidpartikel, der durch Messen der Partikelgrößenverteilung gemäß einem Coulter-Zählverfahren bestimmt wird, 0,5 bis 10 $\mu$m beträgt, und wobei die Harzschicht eine mehrschichtige Struktur enthält, die eine Schicht (x$\beta$), die hauptsächlich den Harzteil (X) enthält, eine Schicht (Y1), die den Partikelteil (Y) in einer Menge von 15 Massenprozent oder mehr enthält, und eine Schicht (X$\alpha$), die hauptsächlich den Harzteil (X) enthält, in dieser Reihenfolge von der Seite laminiert, auf der das Substrat oder das Trennmaterial bereitgestellt ist,
wobei mindestens eine Oberfläche ($\alpha$) der Harzschicht, die der Seite, auf der das Substrat oder das Trennmaterial bereitgestellt ist, gegenüberliegt, Haftklebefähigkeit aufweist,
wobei mehrere konkave Abschnitte mit einer maximalen Höhendifferenz von 0,5 $\mu$m oder mehr in einem Bereich (P) vorhanden sind, der von einem Quadrat mit einer Kantenlänge von 5 mm umgeben ist, das auf der Oberfläche ($\alpha$) willkürlich gewählt ist, und 95% oder mehr der mehreren konkaven Abschnitte, die innerhalb des Bereichs (P) vorhanden sind, voneinander abweichende Formen aufweisen, und
wenn die Oberfläche ($\alpha$) der Harzschicht an einer glatten Oberfläche einer lichtdurchlässigen Klebefläche mit einer glatten Oberfläche angebracht ist, was eine Oberfläche bedeutet, deren mittlere Mittellinienrauhigkeit (Ra$_{75}$), gemessen nach JIS B0601:2001, 0.1 $\mu$m oder weniger beträgt und die Eigenschaft hat, eine Gesamtlichtdurchlässigkeit von 70% oder mehr, gemessen nach JIS K7105, aufzuweisen, beträgt das Flächenverhältnis der angebrachten Fläche zur glatten Oberfläche der lichtdurchlässigen Klebefläche welche an der Oberfläche ($\alpha$) angebracht ist, 10 bis 95 %, bestimmt nach dem in der eingereichten Beschreibung der vorliegenden Erfindung beschriebenen Verfahren.

2. Die Haftklebefolie nach Anspruch 1, wobei die mehreren konkaven Abschnitte unregelmäßig auf der Oberfläche ($\alpha$) vorhanden sind.

3. Die Haftklebefolie nach Anspruch 1 oder 2, wobei die Form der angebrachten Fläche nach Anspruch 1 eine unregelmäßige Form aufweist.

4. Die Haftklebefolie nach einem der Ansprüche 1 bis 3, wobei das in dem Harzteil (X) enthaltene Harz ein Haftkleberharz enthält.

5. Die Haftklebefolie nach einem der Ansprüche 1 bis 4, wobei das in dem Harzteil (X) enthaltene Harz ein Acrylharz mit einer funktionellen Gruppe enthält.

6. Die Haftklebefolie nach einem der Ansprüche 1 bis 5, wobei die Oberfläche ($\beta$) der Harzschicht auf der Seite, auf der das Substrat oder das Trennmaterial vorgesehen ist, Haftklebefähigkeit aufweist.

7. Die Haftklebefolie nach Anspruch 6, die die Harzschicht auf dem Trennmaterial aufweist.

8. Die Haftklebefolie nach einem der Ansprüche 1 bis 7, wobei der Gehalt (Masse-%) der in der Harzschicht enthaltenen Siliciumdioxidpartikel 3 bis 90 Masse-% beträgt und der Gehalt (Masse-%) der in der Harzschicht enthaltenen Siliciumdioxidpartikel durch den folgenden Ausdruck berechnet wurde:
Gehalt (Masse-%) der in der Harzschicht enthaltenen Siliciumdioxidpartikel = ((Masse der Harzschicht nach Erhitzen auf 800°C für 30 Minuten)/(Masse der Harzschicht vor dem Erhitzen)) $\times$ 100.

9. Die Haftklebefolie nach einem der Ansprüche 1 bis 8, wobei:

    die Schicht (X$\beta$) eine Schicht ist, die durch eine Zusammensetzung (x$\beta$) gebildet wird, die das Harz als Hauptkomponente enthält,
    die Schicht (Y1) eine Schicht ist, die durch eine Zusammensetzung (y) gebildet wird, die die Siliciumdioxidpartikel in einer Menge von 15 Massenprozent oder mehr enthält, und
    die Schicht (X$\alpha$) eine Schicht ist, die durch eine Zusammensetzung (x$\alpha$) gebildet ist, die das Harz als eine Hauptkomponente enthält.

10. Ein Verfahren zur Herstellung einer Haftklebefolie nach Anspruch 9, das mindestens die folgenden Schritte (1A) und (2A) umfasst:

Schritt (1A): einen Schritt des Ausbildens, auf einem Substrat oder einem Trennmaterial, eines Beschichtungsfilms (xβ'), der durch die Zusammensetzung (xβ), die das Harz als eine Hauptkomponente enthält, gebildet wird, eines Beschichtungsfilms (y'), der durch die Zusammensetzung (y), die die Siliciumdioxidpartikel in einer Menge von 15 Massenprozent oder mehr enthält, gebildet wird, und eines Beschichtungsfilms (xα'), der durch die Zusammensetzung (xα), die das Harz als eine Hauptkomponente enthält, gebildet wird, durch Laminieren in dieser Reihenfolge; und

Schritt (2A): ein Schritt des simultanen Trocknens des Beschichtungsfilms (xβ'), des Beschichtungsfilms (y') und des im Schritt (1A) gebildeten Beschichtungsfilms (xα').

**11.** Ein Verfahren zur Herstellung einer druckempfindlichen Haftklebefolie nach Anspruch 9, das mindestens die folgenden Schritte (1B) und (2B) umfasst:

Schritt (1B): einen Schritt des Bildens eines Beschichtungsfilms (y'), der durch die Zusammensetzung (y), die Siliciumdioxidpartikel in einer Menge von 15 Massenprozent oder mehr enthält, und eines Beschichtungsfilms (xα'), der durch die Zusammensetzung (xα), die das Harz als eine Hauptkomponente enthält, gebildet wird, auf der Schicht (Xß), die hauptsächlich einen Harzteil (X) enthält, der auf einem Substrat oder einem Trennmaterial vorgesehen ist, durch Laminieren in dieser Reihenfolge; und

Schritt (2B): ein Schritt des simultanen Trocknens des Beschichtungsfilms (y') und des in Schritt (1B) gebildeten Beschichtungsfilms (xα').

## Revendications

**1.** Feuille adhésive sensible à la pression comprenant, sur un substrat ou un matériau de relâchement, une couche de résine, qui comprend une part de résine (X) contenant une résine comme un composant principal, et une part de particules (Y) composée de particules de silice, dans lequel le diamètre de particules secondaires de volume moyen des particules de silice, déterminé en mesurant la distribution de tailles de particule selon la méthode du compteur Coulter est compris entre 0,5 et 10 $\mu$m,

et dans lequel la couche de résine comprend une structure à multicouches, qui contient une couche (Xβ) contenant surtout la part de résine (X), une couche (Y1) contenant la part de particules (Y) dans une quantité de 15 % en masse ou plus, et une couche (Xα) contenant surtout la part de résine (X), laminées dans cet ordre à partir de la face, sur laquelle le substrat ou le matériau de relâchement est prévu,

au moins une surface (α) de la couche de résine étant opposée à la face de celle-ci, sur laquelle le substrat ou le matériau de relâchement est prévu ayant une adhésivité sensible à la pression,

dans lequel plusieurs parties concaves comprenant une différence maximale de hauteur de 0,5 $\mu$m ou plus se trouvent dans une zone (P) entourée par un carré comprenant une longueur de bord de 5 mm, qui est arbitrairement sélectionnée, sur la surface (α), et 95 % ou plus des plusieurs parties concaves, qui se trouvent à l'intérieur de la zone (P), comprennent des formes, qui sont différentes l'une de l'autre, et

si la surface (α) de la couche de résine est jointe à une surface lisse d'un transmetteur de lumière adhéherant, qui a une surface lisse, ce qui signifie une surface, dont la rugosité moyenne de la ligne centrale (Ra$_{75}$) définie dans JIS B0601 :2001 est 0,1 $\mu$m ou moins, et qui comprend une caractéristique d'avoir une transmission de lumière totale de 70 % ou plus telle que mesurée selon JIS K7105, le rapport de surface de la zone jointe à la surface lisse du transmetteur de lumière adhérant à la surface (α) est compris entre 10 et 95 %, déterminé par la méthode décrite dans la description de l'invention présente telle que déposée.

**2.** Feuille adhésive sensible à la pression selon la revendication 1, dans lequel les plusieurs parties concaves sont présentes irrégulièrement sur la surface (α).

**3.** Feuille adhésive sensible à la pression selon la revendication 1 ou la revendication 2, dans lequel la forme de la zone jointe telle que définie dans la revendication 1 est irrégulière.

**4.** Feuille adhésive sensible à la pression selon l'une quelconque des revendications 1 à 3, dans lequel la résine contenue dans la part de résine (X) contient une résine adhésive sensible à la pression.

**5.** Feuille adhésive sensible à la pression selon l'une quelconque des revendications 1 à 4, dans lequel la résine contenue dans la part de résine (X) contient une résine acrylique ayant un groupe fonctionnel.

**6.** Feuille adhésive sensible à la pression selon l'une quelconque des revendications 1 à 5, dans lequel la surface (β) de la couche de résine sur la face, sur laquelle le substrat ou le matériau de relâchement est prévu, comprend une adhésivité sensible à la pression.

7. Feuille adhésive sensible à la pression selon la revendication 6, laquelle comprend la couche de résine sur le matériau de relâchement.

8. Feuille adhésive sensible à la pression selon l'une quelconque des revendications 1 à 7, dans lequel la teneur (% en masse) en particules de silice contenues dans la couche de résine est comprise entre 3 et 90% en masse, et la teneur (% en masse) en particules de silice contenues dans la couche de résine a été calculée par l'expression suivante :

teneur (% en masse) des particules de silice contenues dans la couche de résine = ((masse de la couche de résine après le chauffage à 800°C pour 30 minutes)/(masse de la couche de résine avant le chauffage)) x 100.

9. Feuille adhésive sensible à la pression selon l'une quelconque des revendications 1 à 8, dans lequel
la couche (Xβ) est une couche formée par une composition (xβ), qui contient la résine comme un composant principal,
la couche (Y1) est une couche formée par une composition (y), qui contient les particules de silice dans une quantité de 15 % en masse ou plus, et
la couche (Xα) est une couche formée par une composition (xα), qui contient la résine comme un composant principal.

10. Procédé de fabrication d'une feuille adhésive sensible à la pression selon la revendication 9, qui comprend au moins les étapes suivantes (1A) et (2A) :

étape (1A) : une étape de former, sur un substrat ou sur un matériau de relâchement, un film de revêtement (xβ') formé par la composition (xβ), qui contient la résine comme un composant principal, un film de revêtement (y') formé par la composition (y), qui contient les particules de silice dans une quantité de 15 % en masse ou plus, et un film de revêtement (xα') formé par la composition (xα), qui contient la résine comme un composant principal, en laminant les couches dans cet ordre ; et
étape (2A) : une étape de sécher le film de revêtement (xβ'), le film de revêtement (y') et le film de revêtement (xα') formés dans l'étape (1A) simultanément.

11. Procédé de fabrication d'une feuille adhésive sensible à la pression selon la revendication 9, qui comprend au moins les étapes suivantes (1B) et (2B) :

étape (1B) : une étape de former, sur la couche (Xβ), qui contient surtout la part de résine (X), et qui est disposée sur un substrat ou un matériau de relâchement, un film de revêtement (y') formé par la composition (y), qui contient les particules de silice dans une quantité de 15 % en masse ou plus, et un film de revêtement (xα') formé par la composition (xα), qui contient la résine comme un composant principal, en laminant les couches dans cet ordre ; et
étape (2B) : une étape de sécher le film de revêtement (y') et le film de revêtement (xα') formés dans l'étape (1B) simultanément.

Fig. 1

(a)

(b)

(c)

(d)

Fig. 2

(a)

(b)

Fig. 3

Fig. 4
(a)

(b)

Fig. 5

(a)

(b)

Fig. 6

（a）

S-4700 10.0kV 11.5mm SE(M)　　　200um

（b）

S-4700 10.0kV 12.0mm SE(M)　　　1.00mm

Fig. 7

(a)

(b)

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001507732 A
- US 6294250 B1
- JP 2009035609 A
- JP 2002275433 A
- JP 2012197332 A
- JP 2008150431 A